# EUROPEAN PATENT APPLICATION

(11) **EP 3 045 320 A1**
(43) Date of publication of application: **20.07.2016**
(21) Application number: 14843401.2
(22) Date of filing: 06.06.2014
(51) Int. Cl.: B41N 1/12, B41C 1/05, G03F 7/00

(54) **METHOD FOR MANUFACTURING FLEXOGRAPHIC PRINTING ORIGINAL PLATE FOR LASER ENGRAVING, METHOD FOR MANUFACTURING FLEXOGRAPHIC PRINTING PLATE, AND LASER ENGRAVING RESIN COMPOSITION**

(30) Priority: 13.09.2013 JP 2013190005; 04.12.2013 JP 2013251427; 31.03.2014 JP 2014072300
(71) Applicant: Fujifilm Corporation, Minato-ku Tokyo 106-8620 (JP)
(72) Inventor: SATO Hiroshi, Haibara-gun Shizuoka 421-0396 (JP); TASHIRO Hiroshi, Haibara-gun Shizuoka 421-0396 (JP)
(74) Representative: Hoffmann Eitle
(86) International application number: PCT/JP2014/065134
(87) International publication number: WO 2015/037289

(57) **Abstract**

Provided are a resin composition for laser engraving having excellent roll detachability and sheet appearance when the resin composition is subjected to calender processing, and a method for producing a flexographic printing plate precursor for laser engraving and a method for producing a flexographic printing plate, which use the resin composition for laser engraving. Disclosed is a method for producing a flexographic printing plate precursor for laser engraving, the method including, in the following order, a layer forming step of forming a relief forming layer using a resin composition for laser engraving, through sheet molding using a calender roll; and a crosslinking step of crosslinking the relief forming layer by means of heat, and obtaining a flexographic printing plate precursor for laser engraving having a crosslinked relief forming layer, in which the resin composition for laser engraving is a resin composition including a diene-based polymer, a thermal polymerization initiator, carbon black, and a filler other than carbon black.

## Description

### BACKGROUND OF THE INVENTION

### 1. Field of the Invention

The present invention relates to a method for producing a flexographic printing plate precursor for laser engraving, a method for producing a flexographic printing plate, and a resin composition for laser engraving.

### 2. Description of the Related Art

There have been many proposals relating to the so-called "direct engraving CTP method", in which plate-making is achieved by directly engraving a relief forming layer by means of a laser.

In the direct engraving CTP method, concave sections are formed by directly irradiating a flexographic plate precursor with laser light, and causing thermal decomposition and volatilization to occur in a relief forming layer as a result of photothermal conversion. Furthermore, unlike relief formation using an original image film, the direct engraving CTP method enables the relief shape to be freely controlled. For this reason, in a case in which an image such as an outlined character is formed, the image region can be engraved more deeply than other regions, or in the case of a fine halftone dot image, shouldered engraving or the like can also be carried out in consideration of the resistance to printing pressure.

Furthermore, regarding the laser used for the direct engraving CTP method, a high power carbon dioxide laser is generally used. In the case of a carbon dioxide laser, all organic compounds can absorb the irradiation energy and convert the energy to heat. On the other hand, inexpensive small-sized semiconductor lasers have been developed; however, since these emit visible and near-infrared light, it is necessary to absorb laser light and then to convert the light to heat.

Regarding such a resin composition for laser engraving, for example, JP2011-20363A describes a "method for producing a printing plate precursor, the method including a step of disposing a thermosetting resin composition on the surface of an electroconductive support; and a step of subjecting the electroconductive support to high frequency induction heating, thereby heating and curing the thermosetting resin composition from the side of the surface that is in contact with the electroconductive support, and thus forming, on the electroconductive support, a resin layer that is formed as the thermosetting resin composition is cured" ([Claim 1]), and the document also describes an embodiment in which the thermosetting resin composition includes a thermal polymerization initiator, and an embodiment in which the thermosetting resin composition includes carbon black ([Claim 4] and [Claim 5]).

Also, in regard to the method of disposing a thermosetting resin composition on the surface of an electroconductive support, JP2011-20363A describes, as an example, a method of performing calender processing using rolls and thereby matching the thicknesses, or the like ("0024"), and describes polydienes and the like as the resin (a) that is included in the thermosetting resin composition ("0038").

### SUMMARY OF THE INVENTION

The inventors of the present invention conducted an investigation on the thermosetting resin composition (resin composition for laser engraving) described in JP2011-20363A, and the inventors found that when calender processing using rolls is performed, detachability from a calender roll (hereinafter, also simply described as "roll detachability") and the external appearance of the detached sheet (hereinafter, also simply described as "sheet appearance") are poor.

Thus, an object of the invention is to provide a resin composition for laser engraving, having excellent roll detachability and sheet appearance when the resin composition is subjected to calender processing, a method for producing a flexographic printing plate precursor for laser engraving and a method for producing a flexographic printing plate, which use the resin composition for laser engraving.

The inventors of the present invention conducted a thorough investigation on the object described above, and as a result, they found that when a resin composition for laser engraving including a diene-based polymer, a thermal polymerization initiator, carbon black, and a filler other than carbon black is used, excellent roll detachability and sheet appearance are obtained when the resin composition is subjected to calender processing. Thus, the inventors completed the invention.

That is, the inventors found that the object described above can be solved by means of the following configurations.

[1] A method for producing a flexographic printing plate precursor for laser engraving, the method including, in the following order:
   a layer forming step of forming a relief forming layer using a resin composition for laser engraving, through sheet molding using a calender roll; and
   a crosslinking step of crosslinking the relief forming layer by means of heat, and obtaining a flexographic printing plate precursor for laser engraving having a crosslinked relief forming layer,
   wherein the resin composition for laser engraving is a resin composition including a diene-based polymer, a thermal polymerization initiator, carbon black, and a filler other than carbon black.
[2] The method for producing a flexographic printing plate precursor for laser engraving according to [1], wherein the filler is at least one filler selected from the group consisting of silica, calcium carbonate, mica, talc, and a stearic acid metal salt.
[3] The method for producing a flexographic printing plate precursor for laser engraving according to [1] or [2], wherein the filler is at least one filler selected from the group consisting of silica and calcium carbonate.
[4] The method for producing a flexographic printing plate precursor for laser engraving according to [2] or [3], wherein the resin composition for laser engraving includes at least silica as the filler, and the nitrogen adsorption specific surface area of the silica is 50 m²/g to 300 m²/g.
[5] The method for producing a flexographic printing plate precursor for laser engraving according to any one of [1] to [4], wherein the average particle size of the carbon black is 13 nm to 50 nm.
[6] The method for producing a flexographic printing plate precursor for laser engraving according to any one of [1] to [5], wherein the diene-based polymer is at least one polymer selected from the group consisting of polyisoprene, polybutadiene, and an ethylene-propylene-diene copolymer.
[7] The method for producing a flexographic printing plate precursor for laser engraving according to any one of [1] to [6], wherein the diene-based polymer is at least one polymer selected from the group consisting of polyisoprene and polybutadiene.
[8] The method for producing a flexographic printing plate precursor for laser engraving according to any one of [1] to [7], wherein the content of the thermal polymerization initiator is 0.1 parts by mass to 3 parts by mass relative to 100 parts by mass of the diene-based polymer.
[9] A method for producing a flexographic printing plate, the method including an engraving step of performing laser engraving on a flexographic printing plate precursor for laser engraving obtained by the production method according to any one of [1] to [8], and forming a relief layer; and a rinsing step of rinsing the surface of the relief layer with an aqueous alkali solution, and obtaining a flexographic printing plate.
[10] The method for producing a flexographic printing plate according to [9], wherein the pH of the aqueous alkali solution is 10.0 or higher.
[11] A resin composition for laser engraving, used for forming a relief forming layer of a flexographic printing plate precursor for laser engraving, the resin composition including a diene-based polymer, a thermal polymerization initiator, carbon black, and a filler other than carbon black.
[12] The resin composition for laser engraving according to [11], wherein the thermal polymerization initiator is an organic peroxide.
[13] The resin composition for laser engraving according to [11 or [12], wherein the filler is at least one filler selected from the group consisting of silica, calcium carbonate, mica, talc, and a stearic acid metal salt.
[14] The resin composition for laser engraving according to any one of [11] to [13], wherein the filler is at least one filler selected from the group consisting of silica and calcium carbonate.
[15] The resin composition for laser engraving according to [13] or [14], wherein the resin composition includes at least silica as the filler, and the nitrogen adsorption specific surface area of the silica is 50 m²/g to 300 m²/g.
[16] The resin composition for laser engraving according to any one of [11] to [15], wherein the average particle size of the carbon black is 13 nm to 50 nm.
[17] The resin composition for laser engraving according to any one of [11] to [16], wherein the diene-based polymer is at least one polymer selected from the group consisting of polyisoprene, polybutadiene, and an ethylene-propylene-diene copolymer.
[18] The resin composition for laser engraving according to any one of [11] to [17], wherein the diene-based polymer is at least one polymer selected from the group consisting of polyisoprene and polybutadiene.
[19] The resin composition for laser engraving according to any one of [11] to [18], wherein the content of the thermal polymerization initiator is 0.1 parts by mass to 3 parts by mass relative to 100 parts by mass of the diene-based polymer.
[20] The resin composition for laser engraving according to any one of [11] to [19], wherein the content of the carbon black is 3 parts by mass to 30 parts by mass relative to 100 parts by mass of the diene-based polymer.

According to the invention, a resin composition for laser engraving having excellent roll detachability and sheet appearance when the resin composition is subjected to calender processing, a method for producing a flexographic printing plate precursor for laser engraving and a method for producing a flexographic printing plate, which use the resin composition for laser engraving, can be provided.

### BRIEF DESCRIPTION OF THE DRAWINGS

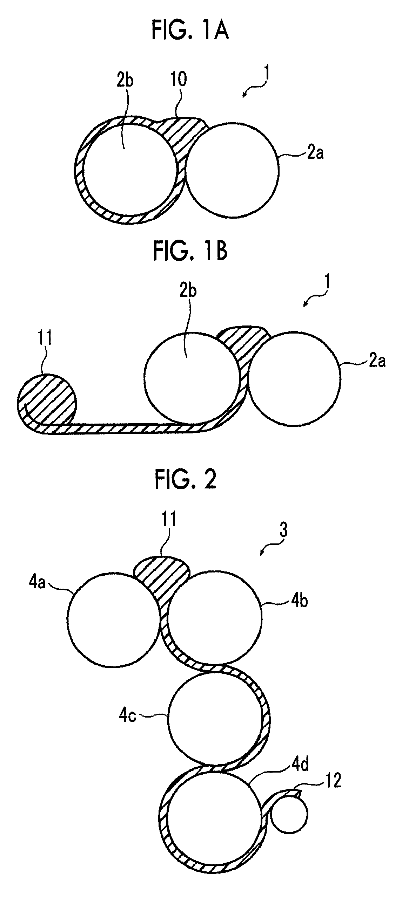

Figs. 1A and 1B are conceptual diagrams for explaining the layer forming step of forming a relief forming layer, Fig. 1A is a conceptual diagram for explaining a kneading process of kneading a resin composition for laser engraving, and Fig. 1B is a conceptual diagram for explaining a process of drawing the kneaded resin composition for laser engraving into a sheet form by cutting the resin composition in the middle, and winding the sheet in a roll form.
Fig. 2 is a conceptual diagram for explaining the layer forming step of forming a relief forming layer, and is a conceptual diagram for explaining a process of roll molding the kneaded resin composition for laser engraving using a calender roll, and performing sheet molding.

### DESCRIPTION OF THE PREFERRED EMBODIMENTS

The present invention will be described in detail below.

Meanwhile, according to the invention, the description "lower limit to upper limit" indicating a value range represents "lower limit or more, and upper limit or less", and the description of "upper limit to lower limit" represents "upper limit or less, and lower limit or more". That is, these descriptions indicate value ranges including the upper limit and the lower limit.

Furthermore, the units "parts by mass" and "percent (%) by mass" have the same meanings as "parts by weight" and "percent (%) by weight", respectively.

A combination of preferred embodiments in the following explanation is a more preferred embodiment.

The method for producing a flexographic printing plate precursor for laser engraving of the invention is a production method including, in the following order, a layer forming step of forming a relief forming layer using a resin composition for laser engraving (hereinafter, also referred to as "resin composition for laser engraving of the invention"), through sheet molding using a calender roll; and a crosslinking step of crosslinking the relief forming layer by means of heat, and obtaining a flexographic printing plate precursor for laser engraving having a crosslinked relief forming layer.

Furthermore, the method for producing a flexographic printing plate of the invention is a plate-making method including an engraving step of performing laser engraving on a flexographic printing plate precursor for laser engraving obtained by the method for producing a flexographic printing plate precursor for laser engraving of the invention, and forming a relief layer; and a rinsing step of rinsing the surface of the relief layer with an aqueous alkali solution, and obtaining a flexographic printing plate.

In addition, the resin composition for laser engraving of the invention (hereinafter, also referred to as "resin composition of the invention") is a resin composition including a diene-based polymer, a thermal polymerization initiator, carbon black, and a filler other than carbon black.

According to the invention, as described above, when the resin composition of the invention is used, satisfactory roll detachability and sheet appearance are obtained when calender processing is implemented.

The detailed mechanism thereof is not clearly understood, but the mechanism is speculated as follows.

That is, it is speculated to be because when a resin composition obtained by blending a diene-based polymer, a thermal polymerization initiator and carbon black with a filler is used, curing can be achieved with a small amount of the thermal polymerization initiator, dispersibility of the carbon black is increased, and as a result, early curing (crosslinking) during the calender processing can be suppressed, so that satisfactory processability for the calender processing is obtained.

Hereinafter, the resin composition for laser engraving of the invention will be described in detail, and then the method for producing a flexographic printing plate of the invention will be described in detail.

### [Resin composition for laser engraving]

The resin composition for laser engraving of the invention is a resin composition including a diene-based polymer, a thermal polymerization initiator, carbon black, and a filler other than carbon black.

Next, the various components and optional components included in the resin composition of the invention will be explained.

### [Diene-based polymer]

The diene-based polymer included in the resin composition of the invention is not particularly limited, and any conventionally known diene-based polymer can be used without limitations.

Specific examples of the diene-based polymer include polyisoprene, polybutadiene, an ethylene-propylene-diene copolymer (EPDM), an acrylonitrile-butadiene copolymer, a styrene-butadiene copolymer (SBR), a styrene-isoprene copolymer, and a styrene-isoprene-butadiene copolymer, and these may be used singly or in combination of two or more kinds thereof.

Among these, for the reason that the fluctuation in the film thickness of the flexographic printing plate precursor using a relief forming layer thus formed is decreased, the diene-based polymer is preferably at least one diene-based polymer selected from the group consisting of polyisoprene, polybutadiene, and an ethylene-propylene-diene copolymer.

According to the invention, polyisoprene or polybutadiene may be any polymer in which the main chain mainly contains isoprene or butadiene, respectively, as a monomer unit, and it is also acceptable that a portion thereof is hydrogenated and converted to saturated bonds. Furthermore, the main chain or chain ends of the polymer may be modified into an amino group, an isocyanate group, a carboxyl group, a hydroxyl group, a (meth)acryloyl group, or the like, or may be epoxidated.

Meanwhile, according to the present specification, a (meth)acryloyl group refers to an acryloyl group or a methacryloyl group.

Furthermore, according to the invention, regarding the polyisoprene or polybutadiene, it is preferable that the proportion of the respective monomer unit derived from an aliphatic hydrocarbon (isoprene, butadiene, or a hydrogenation product thereof) present in the main chain is 80 mol% or more.

When the proportion of the monomer unit derived from an aliphatic hydrocarbon present in the main chain is 80 mol% or more, satisfactory rinsability of the engraving residue is obtained, which is preferable.

The content of the monomer unit derived from an aliphatic hydrocarbon is more preferably 90 mol% or more, even more preferably 95 mol%, and particularly preferably 99 mol% or more, of all the monomer unit constituting the main chain of the diene-based polymer.

Meanwhile, according to the invention, the term "main chain" refers to the relatively longest bonded chain in a molecule of the polymer compound that constitutes the resin, and the term "side chain" refers to a carbon chain that is branched from the main chain, while a side chain may contain heteroatoms.

That is, for example, regarding the polyisoprene, the total proportion of the monomer units derived from isoprene and hydrogenation products of isoprene is preferably 80 mol% or more, more preferably 90 mol% or more, even more preferably 95 mol% or more, and particularly preferably 99 mol% or more.

Similarly, regarding the polybutadiene, the total proportion of the monomer units derived from butadiene and hydrogenation products of butadiene is preferably 80 mol% or more, more preferably 90 mol% or more even more preferably 95 mol% or more, and particularly preferably 99 mol% or more.

Furthermore, in the case of using an isoprene/butadiene copolymer as the diene-based polymer, it is preferable that the isoprene/butadiene copolymer contains monomer units derived from isoprene, butadiene, and hydrogenation products thereof in a total amount of 80 mol% or more, more preferably 90 mol% or more, even more preferably 95 mol% or more, and particularly preferably 99 mol% or more.

It is known that isoprene is polymerized by 1,2-addition, 3,4- addition, or 1,4-addition depending on the catalyst or the reaction conditions; however, in this invention, polyisoprene polymerized by any of the additions described above may be employed. Among these, from the viewpoint of obtaining a desired Mooney viscosity, it is preferable that the polyisoprene contains cis-1,4-polyisoprene as a main component. Meanwhile, the content of the cis-1,4-polyisoprene is preferably 50% by mass or more, more preferably 65% by mass or more, even more preferably 80% by mass or more, and particularly preferably 90% by mass or more.

Furthermore, as the polyisoprene, natural rubber may be used, or a commercially available polyisoprene can be used, and for example, NIPOL IR Series (manufactured by Zeon Corp.) may be used.

It is known that butadiene is polymerized by 1,2-addition or 1,4-addition depending on the catalyst or the reaction conditions; however, in this invention, polybutadiene polymerized by any of the additions described above may be employed. Among these, from the viewpoint of obtaining a desired Mooney viscosity, it is more preferable that 1,4-polybutadiene is a main component.

Meanwhile, the content of the 1,4-polybutadiene is preferably 50% by mass or more, more preferably 65% by mass or more, even more preferably 80% by mass or more, and particularly preferably 90% by mass or more.

Additionally, the contents of the cis-form and the trans-form are not particularly limited and may be appropriately selected in a range giving a desired Mooney viscosity; however, from the viewpoint of exhibiting rubber elasticity, the cis-form is preferred, and the content of cis-1,4-polybutadiene is preferably 50% by mass or more, more preferably 65% by mass or more, even more preferably 80% by mass or more, and particularly preferably 90% by mass or more.

Regarding the polybutadiene, any commercially available product may be used, and for example, NIPOL BR Series (manufactured by Zeon Corp.) and UBEPOL BR Series (manufactured by Ube Industries, Ltd.) may be used.

On the other hand, the ethylene-propylene-diene copolymer (EPDM) is preferably a polymer having a Mooney viscosity ML₁₊₄ (100°C) of 25 to 90. Meanwhile, the Mooney viscosity ML₁₊₄ (100°C) is a value measured according to the specifications of ASTM D 1646.

Furthermore, the EPDM is preferably a polymer having an ethylene content of 40% by mass to 70% by mass, and preferably a polymer having a diene content of 1% by mass to 20% by mass.

Also, examples of the diene component of the EPDM include dicyclopentadiene (DCPD), 5-ethylidene-2-norbornene, and 1,4-hexadiene.

According to the invention, it is preferable to use polybutadiene and polyisoprene in combination as the diene-based polymer, for the reason that satisfactory printing durability is obtained.

Here, the mass ratio in the case of using polybutadiene and polyisoprene in combination (polybutadiene/polyisoprene) is preferably 30/70 to 90/10, and more preferably 40/60 to 80/20.

According to the invention, from the viewpoint of the tensile strength of the relief forming layer that has been sheet molded by a calender roll, the diene-based polymer preferably has a weight average molecular weight of 200,000 or more, more preferably 300,000 to 2,000,000, even more preferably 300,000 to 1,500,000, and particularly preferably 300,000 to 700,000.

Here, the weight average molecular weight can be determined by measuring the molecular weight by gel permeation chromatography (GPC) and calculating the weight average molecular weight relative to polystyrene standards. Specifically, for example, regarding GPC, HLC-8220GPC (manufactured by Tosoh Corp.) is used, and three columns, namely, TSKgeL Super HZM-H, TSKgeL Super HZ4000, and TSKgeL SuperHZ2000 (manufactured by Tosoh Corp., 4.6 mm ID x 15 cm) are used, while tetrahydrofuran (THF) is used as an eluent. Furthermore, regarding the conditions, GPC is carried out using an IR detector under the conditions of a sample concentration of 0.35% by mass, a flow rate of 0.35 mL/min, a sample injection amount of 10 µL, and a measurement temperature of 40°C. Also, the detection curve is produced using eight samples of "standard sample TSK standard, polystyrene": "F-40", "F-20", "F-4", "F-1", "A-5000", "A-2500", "A-1000", and "n-propylbenzene".

Furthermore, according to the invention, the Mooney viscosity of the diene-based polymer is preferably 20 or more, more preferably 25 or more, and even more preferably 35 or more, in view of printing durability.

Similarly, the Mooney viscosity of the diene-based polymer is preferably 90 or less, more preferably 70 or less, and even more preferably 60 or less, in view of the solvent solubility and the ease of handling at the time of mixing.

Here, the Mooney viscosity is a value measured according to JIS K6300-1. Specifically, the Mooney viscosity is measured by forming a cylindrical space between temperature-controllable dies to provide a sample chamber, disposing a rotor at the center of the sample chamber, filling the sample chamber with a sample to be analyzed, rotating the rotor at a defined speed of rotation while maintaining the temperature at a predetermined temperature, and detecting the anti-torque of the rotor produced by the viscous resistance of the molten sample using a load cell. Meanwhile, the value of the Mooney viscosity used for the invention represents the Mooney viscosity (ML1+4) obtained by using an L-shaped rotor, rotating the rotor after a preheating period of 1 minute at 100°C, and measuring the viscosity after 4 minutes.

The content of the diene-based polymer in the resin composition is preferably 5% by mass to 90% by mass, more preferably 15% by mass to 85% by mass, and even more preferably 30% by mass to 80% by mass, relative to the total solid content. When the content of the diene-based polymer is in the range described above, a relief layer having excellent rinsability of the engraving residue and excellent ink transferability may be obtained, which is preferable.

### [Thermal polymerization initiator]

The thermal polymerization initiator included in the resin composition of the invention is not particularly limited, and any conventionally known thermal polymerization initiator (for example, a radical polymerization initiator) can be used without limitations.

Specific examples of the thermal polymerization initiator include: (a) an aromatic ketone, (b) an onium salt compound, (c) an organic peroxide, (d) a sulfur-based compound, (e) a hexaarylbiimidazole compound, (f) a keto oxime ester compound, (g) a borate compound, (h) an azinium compound, (i) a metallocene compound, (j) an active ester compound, (k) a compound having a carbon-halogen bond, and (l) an azo-based compound, and these may be used singly or in combination of two or more kinds thereof.

Among these, for the reason that the half-life temperature is high, and consequently scorching (early curing) at the time of kneading of the resin composition can be suppressed, or for the reason that satisfactory engraving sensitivity is obtained, and a satisfactory relief edge shape is obtained when the resin composition is applied to a relief forming layer of a flexographic printing plate precursor, the (c) organic peroxide and the (d) sulfur-based compound, which function as crosslinking agents, are particularly preferred.

Here, regarding the (a) aromatic ketone, (b) onium salt compound, (e) hexaarylbiimidazole compound, (f) keto oxime ester compound, (g) borate compound, (h) azinium compound, (i) metallocene compound, (j) active ester compound, (k) compound having a carbon-halogen bond, and (l) azo-based compound, the compounds described in paragraphs "0074" to "0118" of JP2008-63554A can be preferably used.

Meanwhile, regarding the (c) organic peroxide and (d) sulfur-based compound mentioned as suitable examples, the compounds described below are preferred.

### <Organic peroxide>

Specific examples of the organic peroxide include dicumyl peroxide (10-hour half-life temperature: 116°C), α,α'-di(t-butylperoxy)diisopropylbenzene (10-hour half-life temperature: 119°C), and 2,5-dimethyl-2,5-di(t-butylperoxy)hexane (10-hour half-life temperature: 118°C), and these may be used singly or in combination of two or more kinds thereof.

According to the invention, regarding the form of the organic peroxide, the organic peroxide can be used as a technical product; however, from the viewpoint of handleability problems (hazardousness, workability, and the like), a dilution product at a concentration of 40 wt% (non-hazardous, powdered) in which a technical product is adsorbed to an inorganic filler such as calcium carbonate, or a master batch type dilution product intended to prevent dusting at the time of kneading and to improve dispersibility in the polymer, can be used more preferably.

Regarding the technical product, for example, PERCUMYL D (manufactured by NOF Corp.), PERKADOX BC-FF (manufactured by Kayaku Akzo Corp.), LUPEROX DC (manufactured by Arkema Yoshitomi, Ltd.), PERBUTYL P (manufactured by NOF Corp.), PERKADOX 14 (manufactured by Kayaku Akzo Corp.), LUPEROX F (manufactured by Arkema Yoshitomi, Ltd.), LUPEROX F90P (manufactured by Arkema Yoshitomi, Ltd.), PERHEXA 25B (manufactured by NOF Corp.), KAYAHEXA AD (manufactured by Kayaku Akzo Corp.), and LUPEROX 101 (manufactured by Arkema Yoshitomi, Ltd.) can be used; however, the examples are not intended to be limited to these.

Furthermore, examples of dilution products include PERCUMYL D-40 (manufactured by NOF Corp.; inert filler dilution product), PERCUMYL D-40MB (manufactured by NOF Corp.; dilution product of silica/polymer and others), KAYACUMYL D-40C (manufactured by Kayaku Akzo Corp.; calcium carbonate dilution product), KAYACUMYL D-40MB-S (manufactured by Kayaku Akzo Corp.; rubber master batch), KAYACUMYL D-40MB (manufactured by Kayaku Akzo Corp.; rubber master batch), PERBUTYL P-40 (manufactured by NOF Corp.; inert filler dilution product), PERBUTYL P-40MB (manufactured by NOF Corp.; dilution product of silica/polymer and others), PERKADOX 14/40 (manufactured by Kayaku Akzo Corp.; calcium carbonate dilution product), PERKADOX 14-40C (manufactured by Kayaku Akzo Corp.; calcium carbonate dilution product), LUPEROX F40 (manufactured by Arkema Yoshitomi, Ltd.), PERHEXA 25B-40 (manufactured by NOF Corp.; dilution product of silica and others), KAYAHEXA AD-40C (manufactured by Kayaku Akzo Corp.; calcium silicate dilution product), TRIGONOX 101-40MB (manufactured by Kayaku Akzo Corp.; rubber master batch), and LUPEROX 101XL (manufactured by Arkema Yoshitomi, Ltd.) can be used; however, the examples are not intended to be limited to these.

### <Sulfur-based compound>

Examples of the sulfur-based compound include sulfur (elemental sulfur), sulfur chloride, sulfur dichloride, a mercapto compound, a sulfide compound, a disulfide compound, a polysulfide compound, a thiuram compound, a thiocarbamic acid compound, and a polyfunctional mercapto compound. Among these, suitable examples include sulfur, sulfur chloride, sulfur dichloride, a disulfide compound, a thiuram compound, a thiocarbamic acid compound, and a polyfunctional mercapto compound.

Specific examples of such a sulfur-based compound include sulfur, sulfur chloride, sulfur dichloride, morpholine disulfide, alkylphenol disulfide, tetramethylthiuram disulfide, selenium dimethyldithiocarbamate, pentaerythritol tetrakis(3-mercaptobutyrate), pentaerythritol tetrakisthiopropionate, tris(3-mercaptobutyloxyethyl) isocyanurate, and dipentaerythritol hexakisthiopropionate.

Among these, sulfur, alkylphenol disulfide, and pentaerythritol tetrakis(3-mercaptobutyrate) are preferred, and alkylphenyl disulfide and pentaerythritol tetrakis(3-mercaptobutyrate) are more preferred.

According to the invention, the amount of the thermal polymerization initiator is preferably 0.1 parts by mass to 3 parts by mass, more preferably 0.2 parts by mass to 2 parts by mass, and even more preferably 0.3 parts by mass to 1.5 parts by mass, relative to 100 parts by mass of the diene-based polymer, for the reason that excellent rinsability of the engraving residue and satisfactory printing durability and ink receptivity are obtained.

### [Carbon black]

The carbon black included in the resin composition of the invention is not particularly limited, and as long as dispersibility thereof in the resin composition and the like are stable, any carbon black can be used regardless of the classification by ASTM and the applications (for example, color applications, rubber applications, and battery applications).

Here, according to the invention, it is speculated that carbon black functions as a photothermal conversion agent that accelerates thermal decomposition of a cured product at the time of laser engraving by absorbing laser light and generating heat.

Specific examples of carbon black include furnace black, thermal black, channel black, lamp black, and acetylene black, and these may be used singly or in combination of two or more kinds thereof.

Meanwhile, these carbon blacks can be used as color chips or color pastes, in which carbon blacks have been dispersed in advance in nitrocellulose, a binder or the like using a dispersant as necessary in order to facilitate dispersion; however, from the viewpoint of cost, it is preferable to use the carbon blacks as powders.

According to the invention, the average particle size of carbon black is preferably from 13 nm to 50 nm, more preferably from 15 nm to 40 nm, and particularly preferably from 15 nm to 31 nm, for the reason that satisfactory viscosity or processability of the resin composition is obtained, and satisfactory printing durability is obtained.

Here, the average particle sizes for the carbon black and the filler, which will be described below, are number average particle sizes, and these are measured by transmission electron microscopy.

The nitrogen adsorption specific surface area (hereinafter, may be abbreviated to "N₂SA") of carbon black is preferably from 25 m²/g to 180 m²/g. If the N₂SA is less than 25 m²/g, the carbon black reinforcing effect may not be obtained, and if the N₂SA is more than 180 m²/g, the carbon black gel production occurs excessively, and there is a risk that a predetermined rubber strength and a predetermined elongation may not be obtained. The N₂SA of the carbon black used is more preferably from 30 m²/g to 160 m²/g, and particularly preferably from 40 m²/g to 150 m²/g.

Here, the N₂SAs of carbon black and silica that will be described below can be determined according to JIS K6217-2:2001.

According to the invention, the content of the carbon black is preferably 3 parts by mass to 30 parts by mass, more preferably 5 parts by mass or more but less than 25 parts by mass, and particularly preferably 5 parts by mass or more but less than 20 parts by mass, relative to 100 parts by mass of the diene-based polymer, for the reason that satisfactory sensitivity is obtained at the time of laser engraving, and also, satisfactory ink receptivity is obtained.

Furthermore, regarding the carbon black, carbon black for rubber can be used, and specific examples thereof include SAF, SAF-HS, ISAF, ISAF-LS, ISAF-HS, IISAF, IISAF-HS, IISAF-HS, HAF, HAF-HS, HAF-LS, LI-HAF, FEF, FEF-HS, MAF, MAF-HS, and T-NS. These may be used singly or in combination of two or more kinds thereof.

Specifically, those carbon blacks described below, which are listed in Carbon Black Yearbook No. 48, can be used; however, the examples are not intended to be limited to these. Meanwhile, the values within the parentheses for each carbon black described below represent the average particle size (nm) and the nitrogen adsorption specific surface area (m²/g) in order from the left side.

Examples of carbon blacks manufactured by Asahi Carbon Co., Ltd. include ASAHI #78 (22 nm, 124 m²/g), ASAHI #80 (22 nm, 115 m²/g), ASAHI #70 (28 nm, 77 m²/g), ASAHI #70L (27 nm, 84 m²/g), ASAHI F-200 (38 nm, 51 m²/g), ASAHI #66 (44 nm, 43 m²/g), ASAHI #65 (44 nm, 42 m²/g), ASAHI #60HN (40 nm, 48 m²/g), ASAHI #60H (41 nm, 45 m²/g), ASAHI #60U (43 nm, 43 m²/g), ASAHI #60 (45 nm, 40 m²/g), and ASAHI A-015 (19 nm, 145 m²/g).

Examples of carbon blacks manufactured by NSCC Carbon Co., Ltd. include #300IH (19 nm, 120 m²/g), #300 (24 nm, 117 m²/g), #200IS (26 nm, 95 m²/g), #200 (29 nm, 75 m²/g), #200L (29 nm, 81 m²/g), #200IN (31 nm, 71 m²/g), #10 (40 nm, 49 m²/g), #10K (39 nm, 48 m²/g), #10S (42 nm, 53 m²/g), and #100 (44 nm, 41 m²/g).

Examples of carbon blacks manufactured by Tokai Carbon Co., Ltd. include SEAST 9H (18 nm, 142 m²/g), SEAST 9 (19 nm, 142 m²/g), SEAST 7 HM:N234 (19 nm, 126 m²/g), SEAST 6 (22 nm, 119 m²/g), SEAST 600 (23 nm, 106 m²/g), SEAST 5H (22 nm, 99 m²/g), SEAST KH:N339 (24 nm, 93 m²/g), SEAST 3H (27 nm, 82 m²/g), SEAST NH:N351 (29 nm, 74 m²/g), SEAST 3 (28 nm, 79 m²/g), SEAST N (29 nm, 74 m²/g), SEAST 300 (28 nm, 84 m²/g), SEAST 116HM (38 nm, 56 m²/g), SEAST 116 (38 nm, 49 m²/g), SEAST FM (50 nm, 42 m²/g), and SEAST SO (43 nm, 42 m²/g).

Examples of carbon blacks manufactured by Mitsubishi Chemicals Corp. include DIABLACK A (19 nm, 142 m²/g), DIABLACK N234 (22 nm, 123 m²/g), DIABLACK I (23 nm, 114 m²/g), DIABLACK LI (23 nm, 107 m²/g), DIABLACK II (24 nm, 98 m²/g), DIABLACK N339 (26 nm, 96 m²/g), DIABLACK SH (31 nm, 78 m²/g), DIABLACK H (31 nm, 79 m²/g), DIABLACK LH (31 nm, 84 m²/g), DIABLACK HA (32 nm, 74 m²/g), DIABLACK N550M (43 nm, 47 m²/g), and DIABLACK E (48 nm, 41 m²/g).

Furthermore, carbon black for color applications can be used as the carbon black, and specific examples thereof include commercially available carbon blacks described below; however, the examples are not intended to be limited to these. The average particle size (nm) and the nitrogen adsorption specific surface area (m²/g) are indicated in order in the parentheses.

Examples of carbon blacks manufactured by Mitsubishi Chemicals Corp. include #1000 (18 nm, 180 m²/g), MCF88 (18 nm, 180 m²/g), MA600 (20 nm, 140 m²/g), #750B (22 nm, 124 m²/g), #650B (22 nm, 124 m²/g), #52 (27 nm, 88 m²/g), #47 (23 nm, 132 m²/g), #45 (24 nm, 120 m²/g), #45L (24 nm, 125 m²/g), #44 (24 nm, 110 m²/g), #40 (24 nm, 115 m²/g), #33 (30 nm, 85 m²/g), #32 (30 nm, 83 m²/g), #30 (30 nm, 74 m²/g), #25 (47 nm, 55 m²/g), #20 (50 nm, 45 m²/g), #95 (40 nm, 55 m²/g), #85 (40 nm, 60 m²/g), #260 (40 nm, 70 m²/g), MA77 (23 nm, 130 m²/g), MA7 (24 nm, 115 m²/g), MA8 (24 nm, 120 m²/g), MA11 (29 nm, 92 m²/g), MA100 (24 nm, 110 m²/g), MA100R (24 nm, 110 m²/g), MA100S (24 nm, 110 m²/g), MA230 (30 nm, 74 m²/g), and MA14 (40 nm, 56 m²/g).

### [Filler other than carbon black]

The resin composition of the invention includes a filler other than carbon black described above.

According to the invention, as described above, when the resin composition includes a filler, early curing (crosslinking) during calender processing can be suppressed, and satisfactory processability for calender processing is obtained. Specifically, by adding a filler, tan δ (= G" / G'; G' represents the storage modulus, and G" represents the loss modulus) of an uncured film can be increased, and satisfactory processability is obtained.

The filler may be organic or inorganic; however, for the reason that more satisfactory processability is obtained, and from the viewpoints of cost and the strength of a cured film, it is preferable to use at least one or more selected from the group consisting of silica, calcium carbonate, mica, talc, and a stearic acid metal salt, and it is particularly preferable to use silica and/or calcium carbonate.

The silica is not particularly limited; however, specific examples thereof include fumed silica, calcined silica, precipitated silica, pulverized silica, fused silica, finely powdered silicic anhydride, finely powdered hydrous silicic acid, hydrous aluminum silicate, and hydrous calcium silicate. Among them, fumed silica, precipitated silica, and finely powdered hydrous silicic acid are preferred from the viewpoints of processability and the hardened film strength.

According to the invention, it is preferable to use a silica having a nitrogen adsorption specific surface area (N₂SA) of 50 m²/g to 300 m²/g, and more preferably 100 m²/g to 200 m²/g, for the reason that more satisfactory processability is obtained.

Furthermore, in regard to the filler other than silica, it is preferable to use a filler having an average particle size of 0.005 µm to 20 µm, and more preferably 0.01 µm to 6 µm, for the reason that a satisfactory edge shape of the relief is obtained at the time of laser engraving.

Specifically, commercially available fillers described below can be used; however, the examples are not intended to be limited to these. Meanwhile, the value in the parentheses for each filler described below represents the nitrogen adsorption specific surface area (m²/g) or the average particle size (nm).

Examples of fillers manufactured by Nippon Aerosil Co., Ltd. include hydrophobic fumed silica: AEROSIL R-812 (260±30 m²/g), hydrophobic fumed silica: AEROSIL R-972 (110±20 m²/g), hydrophobic fumed silica: AEROSIL R-974 (170±20 m²/g), hydrophobic fumed silica: AEROSIL R-104 (150±25 m²/g), hydrophobic fumed silica: AEROSIL R-202 (100±20 m²/g), hydrophobic fumed silica: AEROSIL R-805 (150±25 m²/g), hydrophobic fumed silica: AEROSIL R-816 (190±20 m²/g), hydrophobic fumed silica: AEROSIL R-7200 (150±25 m²/g), hydrophobic fumed silica: AEROSIL R-8200 (160±25 m²/g), hydrophobic fumed silica: AEROSIL R-9200 (170±20 m²/g), hydrophobic fumed silica: AEROSIL R-711 (150±25 m²/g), hydrophilic fumed silica: AEROSIL 130 (130±25 m²/g), hydrophilic fumed silica: AEROSIL 150 (150±15 m²/g), hydrophilic fumed silica: AEROSIL 200 (200±25 m²/g), hydrophilic fumed silica: AEROSIL TT600 (200±50 m²/g), and hydrophilic fumed silica: AEROSIL 200 SP (200±25 m²/g).

Examples of fillers manufactured by Nihon Silica Co., Ltd. include finely powdered hydrous silicic acid: NIPSILAQ (202 m²/g).

Examples of fillers manufactured by Tokuyama Corp. include finely powdered hydrous silicic acid: TOKUSIL GU (120 m²/g).

Examples of fillers manufactured by Rhodia Silica Korea Co., Ltd. include finely powdered hydrous silicic acid: ZEOSIL 165GR (144 m²/g).

Examples of fillers manufactured by Evonik United Silica Industrial, Ltd. include finely powdered hydrous silicic acid: ULTRASIL 7000GR (159 m²/g).

Examples of fillers manufactured by Degussa Japan Co., Ltd. include precipitated silica: ULTRASIL VN3 (175 m²/g).

Examples of fillers manufactured by Ohmi Chemical Industry Co., Ltd. include calcium carbonate: SUCCESS 200S (average particle size: 0.04 µm) and calcium carbonate: SUCCESS 200R (average particle size: 0.08 µm).

Examples of fillers manufactured by Takehara Kagaku Kogyo Co., Ltd. include calcium carbonate: Calcium Carbonate 200 (average particle size: 2.7 µm).

Examples of fillers manufactured by Imerys S.A. include calcium carbonate: POLCARB 90 (average particle size: 0.85 µm).

Examples of fillers manufactured by Yamaguchi Mica Co., Ltd. include mica: A-11 (average particle size: 3 µm).

Examples of fillers manufactured by Nippon Talc Co., Ltd. include talc: D-1000 (average particle size: 1 µm).

Examples of fillers manufactured by Nihon Mistron Co., Ltd. include talc: MISTRON VAPOR (average particle size: 5.5 µm).

Examples of fillers manufactured by Kawamura Kasei Industry Co., Ltd. include zinc stearate.

According to the invention, the content of the filler is preferably 0.01 parts by mass or more but less than 50 parts by mass, more preferably 0.05 parts by mass or more but less than 45 parts by mass, and particularly preferably 0.1 parts by mass or more but less than 40 parts by mass, relative to 100 parts by mass of the diene-based polymer, for the reason that more satisfactory processability is obtained, and satisfactory printing durability and ink receptivity are obtained.

Meanwhile, in the case of using two or more kinds of fillers in combination, the content of the filler refers to the content of each filler.

Furthermore, according to the invention, it is preferable to use a stearic acid metal salt as the filler, for the reason that more satisfactory roll detachability is obtained.

The content in the case of using a stearic acid metal salt is preferably 0.01 parts by mass or more but less than 10 parts by mass, more preferably 0.05 parts by mass or more but less than 5 parts by mass, and particularly preferably 0.1 parts by mass or more but less than 2 parts by mass, relative to 100 parts by mass of the diene-based polymer, from the viewpoint that more satisfactory roll detachability is obtained, and contamination of the calender roll is suppressed.

Furthermore, according to the invention, it is preferable to use silica and calcium carbonate in combination as the filler, for the reason that satisfactory printing durability is obtained.

Here, the mass ratio in the case of using silica and calcium carbonate in combination (silica/calcium carbonate) is preferably 25/75 to 80/20, more preferably 30/70 to 75/25, and even more preferably 35/65 to 70/30.

In the following, various components that can be included in the resin composition of the invention, in addition to the diene-based polymer, the thermal polymerization initiator, carbon black and the filler, will be explained.

### [Polymerizable compound]

The resin composition of the invention may further include a polymerizable compound, from the viewpoint of promoting the formation of a crosslinked structure.

The polymerizable compound is preferably, for example, a compound having an ethylenically unsaturated bond (hereinafter, referred to as "ethylenically unsaturated compound").

### <Ethylenically unsaturated compound>

The ethylenically unsaturated compound may be a monofunctional ethylenically unsaturated compound, or may be a polyfunctional ethylenically unsaturated compound; however, a polyfunctional ethylenically unsaturated compound is preferred. Specifically, the polyfunctional ethylenically unsaturated compound is preferably a compound having 2 to 20 terminal ethylenically unsaturated groups. The group of such compounds is widely known in the relevant industrial field, and these can be used without any particular limitations in this invention.

Furthermore, the ethylenically unsaturated compound is preferably an ethylenically unsaturated compound other than the aforementioned diene-based polymer, the compound having a molecular weight of less than 1,000.

Examples of a compound derived from an ethylenically unsaturated group in the polyfunctional ethylenically unsaturated compound include unsaturated carboxylic acids (for example, acrylic acid, methacrylic acid, itaconic acid, crotonic acid, isocrotonic acid, and maleic acid), and esters and amides thereof. Preferably, an ester between an unsaturated carboxylic acid and an aliphatic polyhydric alcohol compound, or an amide between an unsaturated carboxylic acid and an aliphatic polyvalent amine compound is used.

Furthermore, an unsaturated carboxylic acid ester having a nucleophilic substituent such as a hydroxyl group or an amino group; an addition reaction product between an ethylenically unsaturated compound and an amide, a polyfunctional isocyanate or an epoxy compound; a dehydration condensation reaction product between an ethylenically unsaturated compound and a polyfunctional carboxylic acid; and the like can also be suitably used.

Furthermore, an unsaturated carboxylic acid ester having an electrophilic substituent such as an isocyanate group or an epoxy group; an addition reaction product between an ethylenically unsaturated compound and an amide, a monofunctional or polyfunctional alcohol, or an amine; an unsaturated carboxylic acid ester having a leaving substituent such as a halogen group or a tosyloxy group; and a substitution reaction product between an ethylenically unsaturated compound and an amide, a monofunctional or polyfunctional alcohol, or an amine are also suitable.

Furthermore, regarding other examples, a group of compounds replaced with a vinyl compound, an allyl compound, an unsaturated phosphonic acid, styrene and the like, instead of the unsaturated carboxylic acid described above, can also be used.

The ethylenically unsaturated group compound that can be included in the resin composition of the invention is preferably an acrylate compound, a methacrylate compound, a vinyl compound, or an allyl compound, from the viewpoint of reactivity.

Examples of the allyl compound include polyethylene glycol diallyl ether, 1,4-cyclohexane diallyl ether, 1,4-diethylcyclohexyl diallyl ether, 1,8-octane diallyl ether, trimethylolpropane diallyl ether, trimethylolethane triallyl ether, pentaerythritol triallyl ether, pentaerythritol tetraallyl ether, dipentaerythritol pentaallyl ether, dipentaerythritol hexaallyl ether, diallyl phthalate, diallyl terephthalate, diallyl isophthalate, triallyl isocyanurate, triallyl cyanurate, and triallyl phosphate.

Among these, the allyl compound is particularly preferably triallyl isocyanurate or triallyl cyanurate.

Specific examples of a monomer of an ester of an aliphatic polyhydric alcohol compound and an unsaturated carboxylic acid include, as acrylic acid esters, ethylene glycol diacrylate, triethylene glycol diacrylate, 1,3-butanediol diacrylate, tetramethylene glycol diacrylate, propylene glycol diacrylate, neopentyl glycol diacrylate, trimethylolpropane triacrylate, trimethylolpropane tri(acryloyloxypropyl) ether, trimethylolethane triacrylate, hexanediol diacrylate, 1,4-cyclohexanediol diacrylate, tetraethylene glycol diacrylate, pentaerythritol diacrylate, pentaerythritol triacrylate, pentaerythritol tetraacrylate, dipentaerythritol diacrylate, dipentaerythritol hexaacrylate, sorbitol triacrylate, sorbitol tetraacrylate, sorbitol pentaacrylate, sorbitol hexaacrylate, tri(acryloyloxyethyl) isocyanurate, and a polyester acrylate oligomer.

Examples of methacrylic acid esters include tetramethylene glycol dimethacrylate, triethylene glycol dimethacrylate, neopentyl glycol dimethacrylate, trimethylolpropane trimethacrylate, trimethylolethane trimethacrylate, ethylene glycol dimethacrylate, 1,3-butanediol dimethacrylate, hexanediol dimethacrylate, pentaerythritol dimethacrylate, pentaerythritol trimethacrylate, pentaerythritol tetramethacrylate, dipentaerythritol dimethacrylate, dipentaerythritol hexamethacrylate, sorbitol trimethacrylate, sorbitol tetramethacrylate, bis[p-(3-methacryloxy-2-hydroxypropoxy)phenyl]dimethylmethane, and bis[p-(methacryloxyethoxy)phenyl]dimethylmethane.

Examples of itaconic acid esters include ethylene glycol diitaconate, propylene glycol diitaconate, 1,3-butanediol diitaconate, 1,4-butanediol diitaconate, tetramethylene glycol diitaconate, pentaerythritol diitaconate, and sorbitol tetraitaconate.

Examples of crotonic acid esters include ethylene glycol dicrotonate, tetramethylene glycol dicrotonate, pentaerythritol dicrotonate, and sorbitol tetracrotonate.

Examples of isocrotonic acid esters include ethylene glycol diisocrotonate, pentaerythritol diisocrotonate, and sorbitol tetraisocrotonate.

Examples of maleic acid esters include ethylene glycol dimaleate, triethylene glycol dimaleate, pentaerythritol dimaleate, and sorbitol tetramaleate.

Examples of other esters include, for example, the aliphatic alcohol-based esters described in JP1971-27926B (JP-S46-27926B), JP1976-47334B (JP-S51-47334B), and JP1982-196231A (JP-S57-196231A); compounds having an aromatic skeleton described in JP1984-5240A (JP-S59-5240A), JP1984-5241A (JP-S59-5241A), and JP1990-226149A (JP-H02-226149A); compounds containing an amino group described in JP1989-165613A (JP-H01-165613A); and the like are also suitably used.

The ester monomers described above can also be used as mixtures.

Furthermore, specific examples of a monomer of an amide between an aliphatic polyvalent amine compound and an unsaturated carboxylic acid include methylenebisacrylamide, methylenebismethacrylamide, 1,6-hexamethylenebisacrylamide, 1,6-hexamethylenebismethacrylamide, diethylenetriamine trisacrylamide, xylene bisacrylamide, and xylene bismethacrylamide.

Other preferred examples of amide-based monomers include amide-based monomers having a cyclohexylene structure described in JP1979-21726B (JP-S54-21726B).

Furthermore, a urethane-based addition polymerizable compound produced using an addition reaction of an isocyanate and a hydroxyl group is also suitable, and specific examples thereof include, for example, a vinylurethane compound containing two or more polymerizable vinyl groups in one molecule, which is obtained by adding a vinyl monomer containing a hydroxyl group represented by the following Formula (i) to the polyisocyanate compound having two or more isocyanate groups in one molecule, which is described in JP1973-41708B (JP-S48-41708B).

CH₂=C(R)COOCH₂CH(R')OH (i)

provided that R and R' each represent H or CH₃.

Furthermore, the urethane acrylates described in JP1976-37193A (JP-S51-37193A), JP1990-32293B (JP-H02-32293B), and JP1990-16765B (JP-H02-16765B); and the urethane compounds having an ethylene oxide-based skeleton described in JP1983-49860B (JP-S58-49860B), JP1981-17654B (JP-S56-17654B), JP1987-39417B (JP-S62-39417B), and JP1987-39418B (JP-S62-39418B) are also suitable.

Furthermore, a cured composition can be obtained in a short period of time by using the addition polymerizable compounds having an amino structure in the molecule, which are described in JP1988-277653A (JP-S63-277653A), JP1988-260909A (JP-S63-260909A), and JP1989-105238A (JP-H01-105238A).

Other examples include polyfunctional acrylates and methacrylates, such as the polyester acrylates described in JP1973-64183A (JP-S48-64183A), JP1974-43191B (JP-S49-43191B), and JP1977-30490B (JP-S52-30490B); and epoxy acrylates obtained by reacting epoxy resins with (meth)acrylic acid. Also, other examples include the particular unsaturated compounds described in JP1971-43946B (JP-S46-43946B), JP1989-40337B (JP-H01-40337B), and JP1989-40336B (JP-H01-40336B); and the vinylphosphonic acid-based compounds described in JP1990-25493A (JP-H02-25493A). Also, in a certain case, the structure containing a perfluoroalkyl group described in JP1986-22048A (JP-S61-22048A) is suitably used. Furthermore, those compounds introduced as photocurable monomers and oligomers in the Journal of the Adhesion Society of Japan, Vol. 20, No. 7, pp. 300-308 (1984) can also be used.

Examples of the vinyl compound include butanediol-1,4-divinyl ether, ethylene glycol divinyl ether, 1,2-propanediol divinyl ether, 1,3-propanediol divinyl ether, 1,3-butanediol divinyl ether, 1,4-butanediol divinyl ether, neopentyl glycol divinyl ether, trimethylolpropane trivinyl ether, trimethylolethane trivinyl ether, hexanediol divinyl ether, tetraethylene glycol divinyl ether, pentaerythritol divinyl ether, pentaerythritol trivinyl ether, pentaerythritol tetravinyl ether, sorbitol tetravinyl ether, sorbitol pentavinyl ether, ethylene glycol diethylene vinyl ether, ethylene glycol dipropylene vinyl ether, trimethylolpropane triethylene vinyl ether, trimethylolpropane diethylene vinyl ether, pentaerythritol diethylene vinyl ether, pentaerythritol triethylene vinyl ether, pentaerythritol tetraethylene vinyl ether, 1,1,1-tris[4-(2-vinyloxyethoxy)phenyl]ethane, bisphenol A divinyloxyethyl ether, and divinyl adipate.

The ethylenically unsaturated compounds described above may be included singly or in combination of two or more kinds thereof.

The content of the ethylenically unsaturated compound is preferably 0.1% by mass to 30% by mass, and more preferably 1% by mass to 20% by mass, relative to the total mass of the resin composition.

### [Polymerization initiator]

In a case in which the resin composition of the invention includes the aforementioned polymerizable compound (particularly, an ethylenically unsaturated compound), it is preferable to use a polymerization initiator in combination.

Regarding the polymerization initiator, any conventionally known polymerization initiator can be used without limitations.

Also, the polymerization initiator may be a radical polymerization initiator or a cationic polymerization initiator; however, the polymerization initiator is preferably a radical polymerization initiator.

Furthermore, the polymerization initiator may be a thermal polymerization initiator or a photopolymerization initiator; however, the polymerization initiator is preferably a thermal polymerization initiator.

Meanwhile, in a case in which a thermal polymerization initiator is used as an optional polymerization initiator that is used in combination with the aforementioned polymerizable compound, since agents that are the same as the thermal polymerization initiators described above as an essential component can be used, it is not necessary to add an optional polymerization initiator.

### [Other additives (optional components)]

In the resin composition for laser engraving of the invention, various known additives can be appropriately incorporated to the extent that the effects of the invention are not impaired. Examples thereof include a crosslinking aid, a silane coupling agent, another filler, a wax, a process oil, a metal oxide, an ozone decomposition preventing agent, an aging inhibitor, a polymerization inhibitor and a colorant, and these may be used singly or in combination of two or more kinds thereof.

### [Method for producing flexographic printing plate precursor for laser engraving]

The method for producing a flexographic printing plate precursor for laser engraving of the invention (hereinafter, also briefly described as "method for producing printing plate precursor of the invention") is a production method including, in the following order, a layer forming step of forming a relief forming layer using the resin composition for laser engraving of the invention described above, through sheet molding using a calender roll; and a crosslinking step of crosslinking the relief forming layer by means of heat, and obtaining a flexographic printing plate precursor for laser engraving having a crosslinked relief forming layer.

### [Method for producing flexographic printing plate]

The method for producing a flexographic printing plate of the invention is a plate-making method including an engraving step of performing laser engraving on the flexographic printing plate precursor for laser engraving obtained by the method for producing a plate precursor of the invention, and forming a relief layer; and a rinsing step of rinsing the surface of the relief layer with an aqueous alkali solution, and obtaining a flexographic printing plate.

Here, in regard to the explanation of the flexographic printing plate and the flexographic printing plate precursor, an uncrosslinked crosslinkable layer is referred to as "relief forming layer", a layer obtained by crosslinking the relief forming layer is referred to as "crosslinked relief forming layer", and a layer obtained by laser engraving this crosslinked relief forming layer and thereby forming surface unevenness on the surface is referred to as "relief layer".

Also, the crosslinking is carried out by means of heat. The crosslinking is not particularly limited as long as it involves a reaction by which a resin composition is cured, and is associated with a concept that includes a crosslinked structure based on a reaction between diene-based polymers; however, the diene-based polymer may react with another component and form a crosslinking structure. When a printing plate precursor having a crosslinked relief forming layer is laser engraved and rinsed, a "flexographic printing plate" is produced.

Furthermore, for the flexographic printing plate precursor for laser engraving, the "relief forming layer" and the "crosslinked relief forming layer" (hereinafter, these are collectively referred to as "(crosslinked) relief forming layer") may be provided on a support.

Similarly, the flexographic printing plate precursor for laser engraving may further include, if necessary, an adhesive layer between the support and the (crosslinked) relief forming layer, and a slip coating layer and a protective film on the (crosslinked) relief forming layer.

In the following, the layer forming step, the crosslinking step, the engraving step, and the rinsing step will be explained.

### [Layer forming step]

The plate-making method of the method for producing a printing plate precursor of the invention includes a layer forming step of forming a relief forming layer from the resin composition for laser engraving of the invention.

Examples of the method for forming a relief forming layer include a method of molding a resin composition for laser engraving produced by kneading (kneaded product) in a sheet form. Also, sheet molding may be carried out in a state in which a kneaded resin composition for laser engraving is provided on a support, or may be carried out in a state in which no support is provided.

### <Kneading step>

A kneading step of producing a resin composition for laser engraving by kneading will be explained below.

The method of kneading a diene-based polymer, a thermal polymerization initiator, carbon black, and a filler is not particularly limited; however, examples thereof include a method of simultaneously kneading these products (hereinafter, also briefly described as "Method A"), and a method of preliminarily kneading a diene-based polymer, carbon black, and a filler in advance, subsequently adding a thermal polymerization initiator thereto, and kneading the components (hereinafter, also briefly described as "Method B").

Among these, it is preferable to employ Method B from the viewpoint that the dispersibility of carbon black is increased, and the thermal degradability of the thermal polymerization initiator is suppressed.

Examples of a kneading machine include closed type kneading machines such as a single-screw extruder, a multi-screw extruder, a Banbury mixer, an Intermix mixer, and a kneader; and non-closed type (open type) kneading machines such as a mixing roll (open roll); however, there are no particular limitations.

Furthermore, in a case in which kneading is performed according to the Method B described above, it is preferable that the preliminary kneading of the diene-based polymer, carbon black and the filler is carried out by kneading with a closed type mixer, for the purpose of increasing the dispersiblity of the carbon black. After the thermal polymerization initiator is added, it is preferable to perform kneading with a non-closed type kneading machine such as a mixing roll (open roll), from the viewpoint of safety.

Furthermore, the preliminary kneading in the case of performing kneading according to the Method B described above is preferably conducted at 25°C to 200°C, more preferably at 40°C to 180°C, and particularly preferably at 60°C to 160°C, from the viewpoint of the dispersibility of carbon black or from the viewpoint of suppressing oxidation of the diene-based polymer. Also, from similar viewpoints, the kneading time is preferably 1 minute to 60 minutes, more preferably 3 minutes to 40 minutes, and particularly preferably 5 minutes to 20 minutes.

On the other hand, after the thermal polymerization initiator is added, the kneading temperature is preferably 25°C to 120°C, more preferably 30°C to 100°C, and particularly preferably 40°C to 80°C, from the viewpoint of suppressing scorching. From a similar viewpoint, the kneading time is preferably 1 minute to 60 minutes, more preferably 3 minutes to 40 minutes, and particularly preferably 5 minutes to 20 minutes.

Meanwhile, in a case in which kneading is performed according to the Method A described above, the kneading temperature and the kneading time are the same as the kneading temperature and the kneading time, respectively, used after the thermal polymerization initiator is added in the Method B.

Furthermore, the kneading for the Method A, Method B and the like may be performed in open air, or may be performed in the presence of an inert gas such as nitrogen, in order to suppress oxidative deterioration of the polymer.

### <Sheet molding step>

A sheet molding step of molding the resin composition for laser engraving prepared by kneading (kneaded product) into a sheet form, will be explained below.

The resin composition for laser engraving prepared by kneading (kneaded product) is subjected to rolling by calender processing in the sheet molding step, and is produced into a sheet form.

Regarding the calender roll, a calender roll having a roll combination ranging from a pair of rolls (a pair of two rolls such as an upper roll and a lower roll) to a combination of plural rolls can be used, and the number of rolls and the roll gap (clearance) can be set according to the film thickness accuracy required from the product. The number of rolls is two or more, and can be appropriately selected according to the purpose. Furthermore, the shape of the rolls can be set to various shapes depending on the method of combining rolls, and for example, in a combination of four rolls, the rolls can be disposed in various arrangements such as an I-shape in which four rolls are aligned vertically, an S-shape, an inverted L-shape, a Z-shape, and an inclined Z-shape. The gap between rolls is usually set such that the initial roll gap is set to be larger than the intended film thickness, and the roll gap is gradually decreased. The last roll gap is set such that the film thickness of the finished sheet is equal to the intended film thickness.

Figs. 1A and 1B and Fig. 2 show conceptual diagrams for explaining examples of calender processing that is implemented in the sheet molding step.

First, as illustrated in Fig. 1A, a resin composition for laser engraving is subjected to preliminary kneading at a predetermined temperature using warm-up rolls 1 composed of a pair of rolls 2a and 2b. Thereafter, as illustrated in Fig. 1B, the resin composition wound around the roll 2b is cut in the middle, is drawn into a sheet form, and is wound into a roll form.

Next, as illustrated in Fig. 2, the preliminarily kneaded resin composition is subjected to rolling using a calender roll 3 having plural rolls.

The calender roll 3 illustrated in Fig. 2 is a calender roll in which four rolls are arranged in an inverted L-shape. Specifically, the calender roll 3 includes a first roll 4a and a second roll 4b, which are disposed adjacently in the horizontal direction and form a pair; a third roll 4c that is disposed vertically below the second roll 4b and forms a pair with the second roll 4b; and a fourth roll 4d that is disposed vertically below the third roll 4c and forms a pair with the third roll 4c. The calender roll 3 molds a resin composition into a sheet form by performing rolling by sequentially passing the resin composition between the first roll 4a and the second roll 4b, between the second roll 4b and the third roll 4c, and between the third roll 4c and the fourth roll 4d.

As described above, since calender processing is performed using a resin composition for laser engraving including a diene-based polymer, a thermal polymerization initiator, carbon black and a filler, the occurrence of curing in the middle of calender processing can be suppressed, and therefore, according to the method for producing a printing plate precursor of the invention, calender processing can be performed appropriately. Thereby, the film thickness accuracy can be enhanced, and printing durability can be enhanced. Also, the production efficiency can be increased, and the material cost and the facilities cost can be decreased.

The thickness of the (crosslinked) relief forming layer in the flexographic printing plate precursor for laser engraving is preferably from 0.05 mm to 10 mm, more preferably from 0.05 mm to 7 mm, and even more preferably from 0.05 mm to 3 mm, before and after crosslinking.

The film thickness accuracy is preferably adjusted to the range of 15% or less, in view of the uniformity of the engraving sensitivity or in view of the uniformity of the printed image quality.

In order to form a sheet using a calender roll, it is preferable to have the resin composition for laser engraving (kneaded product), which is a raw material, heated to an appropriate temperature, and to have the calender roll heated as well, in order to enhance processability. In order to heat the kneaded product, warm-up rolls can be usually used. When warm-up rolls are used, the kneaded product can be adapted to the rolls, while the kneaded product is heated. The roll temperature is preferably 40°C to 60°C, for the reason that the kneaded product can be easily adapted to the rolls, more satisfactory roll detachability is obtained, and conveyance to the subsequent process is made easier.

Thereafter, the resin composition is molded into a sheet, and it is preferable that the calender roll is usually composed of a pair of rolls having a wide roll gap and a pair of rolls having a narrow roll gap, as described above. The roll temperature in the early stage is preferably 40°C to 60°C, similarly to the warm-up rolls. When the temperature is in this range, the kneaded product is easily adapted to the rolls, and conveyance to the subsequent process is made easier. The roll temperature in the latter stage is preferably 70°C to 120°C. When the temperature is in this range, satisfactory film thickness accuracy is obtained, conveyance to the subsequent process is made easier, decomposition of the thermal polymerization initiator is suppressed, and the occurrence of scorching can be suppressed.

The conveyance speed of the sheet to the calender roll is preferably 0.1 m/min to 100 m/min, and more preferably 0.5 m/min to 10 m/min. When the speed is in this range, the sheet surface becomes smooth, a sheet having smaller surface unevenness can be molded, and the conveyance to the subsequent process becomes easier.

Since there are occasions in which the sheet at a high temperature obtained immediately after being rolled with a calender roll may have internal strain, from the viewpoint of suppressing dimensional changes caused by contraction or the like, it is preferable that the rolled sheet at a high temperature is conveyed to the crosslinking step after being cooled by, for example, passing between plural annealing rolls or cooling rolls. At that time, the sheet may be stored in a state of being wound in a roller form with a release sheet (film) interposed therebetween, or may be conveyed directly to the crosslinking step.

The sheet molding step may be carried out in a state in which the kneaded resin composition for laser engraving is provided on a support that will be described below, or may be carried out in a state without any support.

### [Crosslinking step]

The method for producing a printing plate precursor of the invention includes a crosslinking step of crosslinking the relief forming layer by means of heat, and obtaining a flexographic printing plate precursor for laser engraving having a crosslinked relief forming layer.

Since the relief forming layer contains a thermal polymerization initiator, the relief forming layer can be crosslinked by heating the relief forming layer.

Regarding the method for crosslinking the relief forming layer, for example, a method of performing crosslinking by means of heat is preferred from the viewpoint that the relief forming layer can be cured (crosslinked) uniformly from the surface to the interior.

When the relief forming layer is crosslinked, there are advantages that, firstly, the relief formed after laser engraving becomes sharper, and secondly, the tackiness of the engraving residue generated at the time of laser engraving is suppressed. Furthermore, regarding a general property of materials, when a material has a lower molecular weight, the material becomes not solid but liquid, that is, the material tends to have stronger tackiness. For the engraving residue generated at the time of engraving the relief forming layer, the material tends to have stronger tackiness when a larger amount of a material having a lower molecular weight is used. Since a low molecular weight polymerizable compound becomes a polymer through crosslinking, the engraving residue thus generated tends to have lower tackiness.

When the crosslinking step is carried out using heat, there is an advantage that highly expensive, special apparatuses are not necessary.

In regard to the crosslinking step, crosslinking may be performed after the sheet is cut into an intended size and shape with a cutter before the crosslinking step after the sheet molding, or crosslinking may be performed while the sheet is a continuous sheet after the sheet molding. In the case of the former, a heating press machine is used.

Examples of a thermal crosslinking facility include a hot air heating furnace, a heating press machine (a sheet feed type heating press machine or a continuous type press conveyor), and a heating roll; however, there are no particular limitations. In a case in which crosslinking is achieved after the sheet is cut into an intended size with a cutter before the crosslinking step, a sheet feed type heating press machine is used.

The heating temperature is preferably 100°C to 200°C, more preferably 120°C to 190°C, and particularly preferably 140°C to 180°C, from the viewpoints of the strength (printing durability) of the cured film, rinsability, and the surface tack. The heating time is preferably 1 minute to 100 minutes, more preferably 3 minutes to 60 minutes, and particularly preferably 5 minutes to 30 minutes.

As general references for the heating temperature and the heating time, if heating is achieved at a temperature at which a half-life of the thermal polymerization initiator of 1 minute is obtained, the heating time is 5 minutes to 10 minutes. The one-minute half-life temperatures of the preferred organic peroxides described above are as follows: dicumyl peroxide (175°C), α,α'-di(t-butylperoxy)diisopropylbenzene (175°C), and 2,5-dimethyl-2,5-di(t-butylperoxy)hexane (179°C). However, even if the heating temperature is a temperature lower than or equal to the one-minute half-life temperature, crosslinking can be sufficiently achieved by prolonging the time.

Upon heating, heating may be performed while the sheet is pressed. The pressure at that time is preferably 1 MPa to 20 MPa, and more preferably 3 MPa to 12 MPa, in view of the film thickness accuracy. When the pressure is in this range, a balance is achieved between the pressure applied between the templates of the press machine, and the reaction force such as an elastic repulsive force of the sheet countervailing the pressure, and thereby thermal crosslinking is achieved while the templates of the press machine are maintained at a predetermined distance. Therefore, the film thickness hardly undergoes any change.

The crosslinking process may be carried out with the relief forming layer alone, or in a state in which the relief forming layer has a sheet (film) on one surface or on both surfaces thereof. For example, in a case in which the sheet molding step is carried out in a state in which the kneaded resin composition for laser engraving has been provided on a support, the relief layer may be crosslinked while the support is retained, or the relief layer may be crosslinked alone after the support is detached. Also, after the sheet molding step, in a case in which the sheet is first wound into a roller form with a release sheet (film) interposed thereon, the relief layer may be crosslinked while the release sheet (film) is retained, or the relief layer may be crosslinked alone after the release sheet (film) is peeled off. For the sheet (film) used in that case, any sheet (film) used for the supports described in connection with the sheet molding step described above can be used.

A flexographic printing plate precursor for laser engraving can be obtained by applying a support, an adhesive layer, a protective film, and a slip coat layer as necessary onto the crosslinked relief forming layer. The support, adhesive layer, protective film, and slip coat layer used in that case will be explained.

### <Support>

The material used for the support of the flexographic printing plate precursor for laser engraving is not particularly limited; however, a material having high dimensional stability is preferably used. Examples thereof include metals such as steel, stainless steel, and aluminum; polyesters (for example, polyethylene terephthalate (PET), polybutylene terephthalate (PBT), and polyacrylonitrile (PAN)); plastic resins such as polyvinyl chloride; synthetic rubbers such as styrene-butadiene rubber; and plastic resins (epoxy resins, phenolic resins, and the like) reinforced with glass fibers.

As the support, a PET film or a steel substrate is preferably used. The shape of the support is determined based on whether the crosslinked relief forming layer is in a sheet form or in a sleeve form.

### <Adhesive layer>

In a case in which the crosslinked relief forming layer is formed on a support, an adhesive layer may be provided between the two, for the purpose of strengthening the interlayer adhesive force.

Regarding the material (adhesive) that can be used for the adhesive layer, for example, those described in "I. Skeist, ed., "Handbook of Adhesives", 2nd Edition (1977) can be used.

In the case of providing an adhesive layer, a support having an adhesive layer applied thereon can be used instead.

### <Protective film and slip coat layer>

For the purpose of preventing scratches or dents on the surface of the crosslinked relief forming layer, a protective film may be laminated on the surface of the crosslinked relief forming layer. The thickness of the protective film is preferably 25 µm to 500 µm, and more preferably 50 µm to 200 µm. Regarding the protective film, for example, a polyester-based film such as a PET film, or a polyolefin-based film such as a polyethylene (PE) or polypropylene (PP) film can be used. Also, the surface of the film may be mattified. The protective film is preferably detachable.

Lamination of the protective film can be carried out by compressing the protective film and the crosslinked relief forming layer using a heated calender roll or the like, or by adhering the protective film to the crosslinked relief forming layer, the surface of which has been impregnated with a small amount of a solvent. In the case of using a protective film, a method of first laminating the crosslinked relief forming layer on the protective film, and then laminating a support thereon may be employed.

In a case in which the protective film cannot be peeled off, or on the contrary, in a case in which it is difficult to adhere the protective film to the crosslinked relief forming layer, a slip coat layer may be provided between the two layers. The material used for the slip coat layer is preferably a material which contains, as a main component, a resin that is dissoluble or dispersible in water and is less tacky, such as polyvinyl alcohol, polyvinyl acetate, a partially saponified polyvinyl alcohol, a hydroxyalkyl cellulose, an alkyl cellulose, or a polyamide resin.

In the case of providing a slip coat layer, a protective film having a slip coat layer applied thereon can be used instead.

The protective film may be laminated after the crosslinking step, or may be laminated before the crosslinking step, and there are no particular limitations. Also, the protective film is removed before the engraving step.

### [Engraving step]

The method for producing a flexographic printing plate of the invention includes an engraving step of performing laser engraving on the flexographic printing plate precursor having the crosslinked relief forming layer.

The engraving step is a step of performing laser engraving on the crosslinked relief forming layer that has been crosslinked in the crosslinking step, and thereby forming a relief layer. Specifically, it is preferable to form a relief layer by performing engraving by irradiating the crosslinked relief forming layer that has been crosslinked, with laser light corresponding to a desired image. Also, a process of controlling the laser head with a computer based on digital data of a desired image, and scanning and irradiating the crosslinked relief forming layer, may be preferably employed.

In this engraving step, an infrared laser is preferably used. When the crosslinked relief forming layer is irradiated with infrared laser light, the molecules in the crosslinked relief forming layer undergo molecular vibration, and heat is generated. When a high power laser such as a carbon dioxide laser or a YAG laser is used as the infrared laser, a large amount of heat is generated in the part irradiated with laser light, the molecules in the crosslinked relief forming layer undergo molecular cleavage or ionization, and thus selective removal, that is, engraving, is achieved. An advantage of laser engraving is that since the engraving depth can be arbitrarily set, the structure can be controlled three-dimensionally. For example, in an area where fine half-tone dots are printed, the relief can be prevented from falling down due to the printing pressure, by engraving the area to a shallow depth or by attaching shoulders; and when a grooved area where fine outline characters are printed is engraved deeply, grooves are not easily filled with ink, and thus the outline characters are prevented from collapsing.

Above all, in a case in which engraving is performed using an infrared laser light having a wavelength equivalent to the absorption wavelength of the photothermal conversion agent, selective removal of the crosslinked relief forming layer can be achieved with higher sensitivity, and thus a relief layer having a sharp image can be obtained.

The infrared laser used for the engraving step is preferably a carbon dioxide laser (CO₂ laser) or a semiconductor laser, in view of productivity, cost, and the like. Particularly, fiber-coupled semiconductor infrared laser (FC-LD) is preferably used. Generally, a semiconductor laser enables laser oscillation with high efficiency compared to a CO₂ laser, and size reduction can be achieved at low costs. Furthermore, since semiconductor lasers are small-sized, arraying of lasers can be easily achieved. Also, the beam shape can be controlled by a treatment of fibers.

Regarding the semiconductor laser, laser light having a wavelength of 700 nm to 1,300 nm is preferred; laser light having a wavelength of 800 nm to 1,200 nm is more preferred; laser light having a wavelength of 860 nm to 1,200 nm is even more preferred, and laser light having a wavelength of 900 nm to 1,100 nm is particularly preferred.

Furthermore, a fiber-coupled semiconductor laser can efficiently output laser light by further attaching optic fibers, and therefore, a fiber-coupled semiconductor laser is effective for the engraving step according to the invention. Furthermore, the beam shape can be controlled by a treatment of fibers. For example, the beam profile can be adjusted to a top hat shape, and energy can be stably applied to the printing plate surface. The details of semiconductor lasers are described in "Laser Handbook, 2^{nd} Edition" edited by the Laser Society of Japan, "Practical Laser Technology" edited by the Institute of Electronics and Communication Engineers of Japan, and the like.

Furthermore, a plate-making apparatus equipped with a fiber-coupled semiconductor laser, which can be suitably used for the method for producing a flexographic printing plate using the flexographic printing plate precursor of the invention, is described in detail in JP2009-172658A and JP2009-214334A, and this can be used for the plate-making of the flexographic printing plate related to the invention.

### [Rinsing step]

The method for producing a flexographic printing plate of the invention includes a rinsing step of rinsing the surface of the relief layer with an aqueous alkali solution, subsequently to the engraving step. That is, the method for producing a flexographic printing plate of the invention uses an aqueous alkali solution as a rinsing liquid for the rinsing step. As the method for producing a flexographic printing plate of the invention includes a rinsing step, the engraving residue adhering to and remaining on the surface of the relief layer is removed by washing away.

Examples of the means for rinsing include a method of immersing the printing plate in an aqueous alkali solution; a method of rotating the rinsing liquid or rubbing the engraved plate with a brush, while immersing the printing plate in an aqueous alkali solution; a method of spraying an aqueous alkali solution; and a method of rubbing the engraved surface with a brush mainly in the presence of an aqueous alkali solution, using a batch type or conveyor type brush washing machine, which is known as a developing machine for photosensitive resin relief printing plates. In a case in which the slime of the engraving residue cannot be removed, a rinsing liquid containing soap or a surfactant may be used.

The pH of the rinsing liquid (aqueous alkali solution) that can be used for the invention is preferably 10.0 or higher, more preferably 12 or higher, and even more preferably 13 or higher. Furthermore, the pH of the rinsing liquid is preferably 14 or lower. When the pH is in the above-mentioned range, excellent rinsability is obtained.

In order to adjust the rinsing liquid to the aforementioned pH range, the pH may be adjusted by appropriately using an acid and/or a base, and the acid and the base that may be used are not particularly limited.

It is preferable that the rinsing liquid that can be used for the invention includes water as a main component.

Furthermore, the rinsing liquid may include a water-miscible solvent such as an alcohol, acetone, or tetrahydrofuran, as a solvent other than water.

It is preferable that the rinsing liquid includes a surfactant.

Preferred examples of the surfactant that can be used for the invention include betaine compounds (cationic surfactants) such as a carboxybetaine compound, a sulfobetaine compound, a phosphobetaine compound, an amine oxide compound, and a phosphine oxide compound, from the viewpoint of the rinsability of the engraving residue, and from the viewpoint of reducing the influence on the flexographic printing plate.

Furthermore, examples of the surfactant include known anionic surfactants, cationic surfactants, amphoteric surfactants, and nonionic surfactants. Moreover, fluorine-based and silicone-based nonionic surfactants can also be used similarly.

The surfactants may be used singly, or in combination of two or more kinds thereof.

It is not necessary to particularly limit the amount of use of the surfactant; however, the amount of use is preferably 0.01% by mass to 20% by mass, and more preferably 0.05% by mass to 10% by mass, relative to the total mass of the rinsing liquid.

The method for producing a flexographic printing plate of the invention may further include a drying step and/or a post-crosslinking step described below, if necessary:
Drying step: a step of drying the engraved relief layer;
Post-crosslinking step: a step of applying energy to the relief layer after engraving, and further crosslinking the relief layer.

Here, in a case in which a rinsing step of rinsing the engraved surface is implemented, it is preferable to add a drying step of volatilizing the rinsing liquid by drying the engraved relief forming layer.

Furthermore, a post-crosslinking step of further crosslinking the relief layer as necessary may also be added. By implementing the post-crosslinking step, which is an additional crosslinking step, the relief formed by engraving can be further strengthened.

In this manner, a flexographic printing plate having a relief layer on the surface of an arbitrary base material such as a support is obtained.

The thickness of the relief layer provided on the flexographic printing plate is preferably from 0.05 mm to 10 mm, more preferably from 0.05 mm to 7 mm, and particularly preferably from 0.05 mm to 3 mm, from the viewpoint of satisfying various printing suitability properties such as abrasion resistance and ink transferability.

Furthermore, the Shore A hardness of the relief layer provided on the flexographic printing plate is preferably from 50° to 90°. When the Shore A hardness of the relief layer is 50° or higher, even if the fine half-tone dots formed by engraving is subjected to a high printing pressure of a letterpress printing machine, the fine half-tone dots do not fall down and collapse, and normal printing can be carried out. Furthermore, when the Shore A hardness of the relief layer is 90° or lower, printing blur in a solid printed area can be prevented even in the case of flexographic printing, which is performed at a kiss-touch printing pressure.

Meanwhile, the Shore A hardness according to the present specification is a value measured by a durometer (spring type rubber hardness meter), which deforms an object of measurement by pressing a depressor (referred to as a push pin or an indenter) into the surface of the object at 25°C, measures the amount of deformation thereof (indentation depth), and digitalizes the amount of deformation.

The flexographic printing plate of the invention is particularly suitable for printing with a flexographic printing machine using an aqueous ink; however, even in a case in which any of an aqueous ink, an oily ink, or a UV ink is used with a letterpress printing machine, printing can be achieved, and printing with a flexographic printing machine using a UV ink is also made possible. The flexographic printing plate of the invention has excellent rinsability and does not have any engraving residue remaining thereon. Since the relief layer thus obtained has excellent resilience, the flexographic printing plate has excellent aqueous ink transferability and excellent printing durability, and printing can be performed without any risk of plastic deformation of the relief layer occurring over a long time period, or deterioration of printing durability.

### EXAMPLES

The present invention will be described more specifically by describing Examples and Comparative Examples below. However, the present invention is not intended to be limited to these Examples. Meanwhile, the unit "parts" in the following description represents "parts by mass", unless particularly stated otherwise, and the unit "percent (%)" represents "percent (%) by mass".

Additionally, the number average molecular weight (Mn) and the weight average molecular weight (Mw) of a polymer in the Examples indicate, unless particularly stated otherwise, values measured by a GPC method.

The details of the components used in the various Examples and Comparative Examples are as follows.

### [Diene-based polymer]

(A-1) UBEPOL BR150: polybutadiene (Mooney viscosity (ML₁₊₄, 100°C): 43, manufactured by Ube Industries, Ltd.)
(A-2) UBEPOL BR150B: polybutadiene (Mooney viscosity (ML₁₊₄, 100°C): 40, manufactured by Ube Industries, Ltd.)
(A-3) UBEPOL BR130B: polybutadiene (Mooney viscosity (ML₁₊₄, 100°C): 29, manufactured by Ube Industries, Ltd.)
(A-4) UBEPOL BR150L: polybutadiene (Mooney viscosity (ML₁₊₄, 100°C): 43, manufactured by Ube Industries, Ltd.)
(A-5) UBEPOL BR360L: polybutadiene (Mooney viscosity (ML₁₊₄, 100°C): 51, manufactured by Ube Industries, Ltd.)
(A-6) NIPOL IR2200: polyisoprene (Mooney viscosity (ML₁₊₄, 100°C): 82, manufactured by Zeon Corp.)
(A-7) NIPOL IR2200L: polybutadiene (Mooney viscosity (ML₁₊₄, 100°C): 70, manufactured by Zeon Corp.)
(A-8) UBEPOL VCR412: polybutadiene (Mooney viscosity (ML₁₊₄, 100°C): 45, manufactured by Ube Industries, Ltd.)
(A-9) UBEPOL BR15HL: polybutadiene (Mooney viscosity (ML₁₊₄, 100°C): 43, manufactured by Ube Industries, Ltd.)
(A-10) JSR BR01: polybutadiene (Mooney viscosity (ML₁₊₄, 100°C): 45, manufactured by JSR Corp.)
(A-11) NIPOL 1502: SBR (Mooney viscosity (ML₁₊₄, 100°C): 52, manufactured by Zeon Corp.)
(A-12) MITUI EPT1045: EPDM (Mooney viscosity (ML₁₊₄, 100°C): 38, ethylene content: 58% by mass, diene content: 5% by mass, kind of diene: dicyclopentadiene (DCPD), manufactured by Mitsui Chemicals, Inc.)
(A-13) S-LEC BH-6 (Comparative Example): polyvinyl butyral (Mw = 9.2×10⁴, manufactured by Sekisui Chemical Co., Ltd.)

### [Thermal polymerization initiator]

(B-1) PERCUMYL D-40: organic peroxide, dicumyl peroxide (40% by mass), manufactured by NOF Corp.
(B-2) PERCUMYL D-40MB: organic peroxide, dicumyl peroxide (40% by mass), manufactured by NOF Corp.
(B-3) KAYACUMYL D-40C: organic peroxide, dicumyl peroxide (40% by mass), manufactured by Kayaku Akzo Corp.
(B-4) KAYACUMYL D-40MB-S: organic peroxide, dicumyl peroxide (40% by mass), manufactured by Kayaku Akzo Corp.
(B-5) KAYACUMYL D-40MB: organic peroxide, dicumyl peroxide (40% by mass), manufactured by Kayaku Akzo Corp.
(B-6) PERBUTYL P-40: organic peroxide, α,α'-di(t-butylperoxy)diisopropylbenzene (40% by mass), manufactured by NOF Corp.
(B-7) PERBUTYL P-40MB: organic peroxide, α,α'-di(t-butylperoxy)diisopropylbenzene (40% by mass), manufactured by NOF Corp.
(B-8) PERKADOX 14/40: organic peroxide, α,α'-di(t-butylperoxy)diisopropylbenzene (40% by mass), manufactured by Kayaku Akzo Corp.
(B-9) PERKADOX 14-40C: organic peroxide, α,α'-di(t-butylperoxy)diisopropylbenzene (40% by mass), manufactured by Kayaku Akzo Corp.
(B-10) LUPEROX F40: organic peroxide, α,α'-di(t-butylperoxy)diisopropylbenzene (40% by mass), manufactured by Arkema Yoshitomi, Ltd.
(B-11) PERHEXA 25B-40: organic peroxide, 2,5-dimethyl-2,5-di(t-butylperoxy)hexane (40% by mass), manufactured by NOF Corp.
(B-12) KAYAHEXA AD-40C: organic peroxide, 2,5-dimethyl-2,5-di(t-butylperoxy)hexane (40% by mass), manufactured by Kayaku Akzo Corp.
(B-13) TRIGONOX 101-40MB: organic peroxide, 2,5-dimethyl-2,5-di(t-butylperoxy)hexane (40% by mass), manufactured by Kayaku Akzo Corp.
(B-14) LUPEROX 101XL: organic peroxide, 2,5-dimethyl-2,5-di(t-butylperoxy)hexane (45% by mass), manufactured by Arkema Yoshitomi, Ltd.

### [Carbon black]

(C-1) Asahi #78: manufactured by Asahi Carbon Co., Ltd. (average particle size: 22 nm, nitrogen adsorption specific surface area: 124 m²/g)
(C-2) Asahi #80: manufactured by Asahi Carbon Co., Ltd. (average particle size: 22 nm, nitrogen adsorption specific surface area: 115 m²/g)
(C-3) Asa hi #70: manufactured by Asahi Carbon Co., Ltd. (average particle size: 28 nm, nitrogen adsorption specific surface area: 77 m²/g)
(C-4) #10K: manufactured by NSCC Carbon Co., Ltd. (average particle size: 39 nm, nitrogen adsorption specific surface area: 48 m²/g)
(C-5) #10S: manufactured by NSCC Carbon Co., Ltd. (average particle size: 42 nm, nitrogen adsorption specific surface area: 53 m²/g)
(C-6) #100: manufactured by NSCC Carbon Co., Ltd. (average particle size: 44 nm, nitrogen adsorption specific surface area: 41 m²/g)
(C-7) SEAST 9: manufactured by Tokai Carbon Co., Ltd. (average particle size: 19 nm, nitrogen adsorption specific surface area: 142 m²/g)
(C-8) SEAST 9H: manufactured by Tokai Carbon Co., Ltd. (average particle size: 18 nm, nitrogen adsorption specific surface area: 142 m²/g)
(C-9) SEAST 3: manufactured by Tokai Carbon Co., Ltd. (average particle size: 28 nm, nitrogen adsorption specific surface area: 79 m²/g)
(C-10) DIABLACK A: manufactured by Mitsubishi Chemicals Corp. (average particle size: 19 nm, nitrogen adsorption specific surface area: 142 m²/g)
(C-11) #45L: manufactured by Mitsubishi Chemicals Corp. (average particle size: 24 nm, specific surface area: 125 m²/g)
(C-12) #25: manufactured by Mitsubishi Chemicals Corp. (average particle size: 47 nm, specific surface area: 55 m²/g)

### [Filler other than carbon black]

(D-1) Silica 1: hydrophobic fumed silica AEROSIL R-974 (manufactured by Nippon Aerosil Co., Ltd., nitrogen adsorption specific surface area: 170±20 m²/g)
(D-2) Silica 2: hydrophobic fumed silica AEROSIL R-972 (manufactured by Nippon Aerosil Co. Ltd., nitrogen adsorption specific surface area: 110±20 m²/g)
(D-3) Silica 3: fine-powdered hydrous silicic acid, NIPSIL AQ (manufactured by Nihon Silica Co., Ltd., nitrogen adsorption specific surface area: 202 m²/g)
(D-4) Silica 4: fine-powdered hydrous silicic acid, TOKUSIL GU (manufactured by Tokuyama Chemical Co., Ltd., nitrogen adsorption specific surface area: 120 m²/g)
(D-5) Silica 5: precipitated silica ULTRASIL VN3 (manufactured by Degussa Japan Co. Ltd., nitrogen adsorption specific surface area: 175 m²/g)
(D-6) Calcium carbonate: SUCCESS 200S (manufactured by Ohmi Chemical Industry Co., Ltd.)
(D-7) Mica: A-11 (manufactured by Yamaguchi Mica Co., Ltd.)
(D-8) Talc: D-1000 (manufactured by Nippon Talc Co., Ltd.)
(D-9) Zinc stearate: manufactured by Kawamura Chemical Co., Ltd.

### [Other additives}

### <Polymerizable compound>

(E-1) Triallyl isocyanurate: TAIC (manufactured by Nippon Kasei Chemical Co., Ltd.)
(E-2) Hexanediol diacrylate: A-HD-N (manufactured by Shin Nakamura Chemical Co., Ltd.)
(E-3) Trimethylolpropane trimethacrylate: TMPT (Shin Nakamura Chemical Co., Ltd.)

### <Aging inhibitor>

(F-1) 2,6-Di-tert-butyl-4-methylphenol: manufactured by Kawaguchi Chemical Industry Co., Ltd.
(F-2) N-isopropyl-N'-phenyl-p-phenylenediamine: manufactured by Kawaguchi Chemical Industry Co., Ltd.

### [Example 1]

### <Preparation of resin composition for laser engraving>

Polymer (A-4) as a diene-based polymer, Carbon black (C-7) as carbon black, and Filler (D-2) as a filler were kneaded for 10 minutes at 80°C under the conditions of a front blade speed of 35 rpm and a rear blade speed of 35 rpm, using a MS type small pressure kneader (manufactured by Moriyama Co., Ltd.), and then the kneaded product was cooled to 60°C. Thermal polymerization initiator (B-1) as a thermal polymerization initiator was added thereto, and the mixture was further kneaded for 10 minutes at 60°C under the conditions of a front blade speed of 20 rpm and a rear blade speed of 20 rpm. Thus, a resin composition for laser engraving was prepared.

### <Production of crosslinked relief layer>

The resin composition for laser engraving obtained as described above was molded into a sheet form using a calender roll illustrated in Fig. 2 [manufactured by Nippon Roll Manufacturing Co., Ltd., four rolls arranged in an inverted L-shape, roll size: φ200 x 700 L, roll used: drilled rolls made of forged steel (surface-hardening chrome-plated), temperature adjustment system: hot oil circulation system, driving motor: 7.5 kw inverter motor]. The resin composition for laser engraving was subjected to preliminary kneading for 10 minutes using warm-up rolls that had been adjusted to 50°C, and the resin composition that had twined around the rolls was drawn out into a sheet form by cutting in the middle and was first wound into a roll form. Thereafter, the kneaded product was set between a first roll and a second roll of a calender roll, and was subjected rolling. Regarding the temperatures of the various rolls of the calender roll, the temperature of the first roll was set to 50°C, the temperature of the second roll was set to 60°C, the temperature of the third roll was set to 70°C, and the temperature of the fourth roll was set to 80°C. Regarding the roll gaps, the gap between the first roll and the second roll was set to 1.0 mm, the gap between the second roll and the third roll was set to 0.9 mm, and the gap between the third roll and the fourth roll was set to 0.8 mm. The conveyance speed was set to 1 m/min.

After the sheet passed the fourth roll, the sheet was cut into a size of 20 cm in width and 20 cm in length, and was heated for 20 minutes at 160°C at a pressure of 4 MPa using a press machine (SA-303 manufactured by Tester Sangyo Co., Ltd.). Thus, a crosslinked relief layer having an average film thickness of 0.8 mm was obtained.

### <Production of flexographic printing plate precursor>

On the crosslinked relief layer obtained as described above, a photocurable composition (manufactured by ThreeBond Co., Ltd.; 3030) was applied so as to obtain an average film thickness of 80 µm, and then a PET support having a thickness of 250 µm was bonded thereon with nip rollers. After 20 seconds, the photocurable layer was cured through the PET support side using a UV exposure machine (UV exposure machine, ECS-151U, manufactured by Eye Graphics Co., Ltd.; metal halide lamp, 1,500 mJ/cm², exposed for 14 seconds), and thus a flexographic printing plate precursor was produced.

### <Production of flexographic printing plate>

The flexographic printing plate precursor obtained as described above was engraved using the following two kinds of lasers.

As a carbon dioxide laser engraving machine, a high-resolution CO₂ laser marker, ML-9100 Series (manufactured by Keyence Corp.), was used for performing engraving by irradiation with a laser. A solid image area which measured 1 cm on each of four sides was raster-engraved with the carbon dioxide laser engraving machine under the conditions of output power: 12 W, head speed: 200 mm/sec, pitch: 2,400 DPI.

As a semiconductor laser engraving machine, a laser recording apparatus equipped with a fiber-coupled semiconductor laser (FC-LD), SDL-6390 (manufactured by JDS Uniphase Corp., wavelength: 915 nm) having a maximum output power of 8.0 W was used. A solid image area which measured 1 cm on each of four sides was raster-engraved with the semiconductor laser engraving machine under the conditions of laser output power: 7.5 W, head speed: 409 mm/sec, and pitch: 2,400 DPI.

The engraving machine used is indicated in the following Table 1. Meanwhile, the term "semiconductor" means that the semiconductor laser engraving machine was used, and the term "CO₂" means that the carbon dioxide laser engraving machine was used.

### [Example 2 to Example 45 and Comparative Example 1 to Comparative Example 2]

### <Preparation of resin composition for laser engraving>

Resin compositions for laser engraving were obtained by kneading the components to be incorporated as indicated in the following Table 1 under the same conditions as those of Example 1. Meanwhile, in Examples 42 to 45, the resin compositions were prepared by incorporating other additives (a polymerizable compound and an aging inhibitor).

### <Production of crosslinked relief layer>

Each of the resin compositions for laser engraving obtained as described above was molded and crosslinked in the same manner as in Example 1, and thus a crosslinked relief layer having an average film thickness of 0.8 mm was obtained.

### <Production of flexographic printing plate precursor>

An adhesive layer was applied onto the crosslinked relief layer obtained as described above, in the same manner as in Example 1, and thereby a flexographic printing plate precursor was produced.

### <Production of flexographic printing plate>

The flexographic printing plate precursor obtained as described above was laser-engraved in the same manner as in Example 1, and thus a flexographic printing plate was obtained.

### [Comparative Example 3]

### <Preparation of resin composition for laser engraving>

Polymer (A-4) and n-heptane as a solvent were introduced into a three-necked flask equipped with a stirring blade and a cooling tube, and the mixture was heated, while stirred, for 180 minutes at 70°C to dissolve the polymer.

Subsequently, Carbon black (C-7) and Thermal polymerization initiator (B-1) were added thereto, and the mixture was stirred for 10 minutes. Through this operation, a coating liquid for resin layer having fluidity (resin composition for laser engraving) was obtained.

### <Production of crosslinked relief layer>

A spacer frame having a predetermined thickness is provided on a PET substrate, the coating liquid for resin layer obtained as described above was gently flow cast thereon, and the system was heated for one hour in an oven at 80°C and for another one hour at 140°C without performing sheet molding using a calender roll so as to remove the solvent and to thermally crosslink the resin composition. Thus, a crosslinked relief layer having an average film thickness of 0.8 mm was obtained.

### <Production of flexographic printing plate precursor>

A flexographic printing plate precursor was produced by applying an adhesive layer onto the crosslinked relief layer obtained as described above, in the same manner as in Example 1.

### <Production of flexographic printing plate>

The flexographic printing plate precursor obtained as described above was laser-engraved in the same manner as in Example 1, and thereby a flexographic printing plate was obtained.

### [Comparative Example 4]

### <Preparation of resin composition for laser engraving>

A resin composition for laser engraving was prepared in the same manner as in Example 1, from the components to be incorporated as indicated in the following Table 1.

### <Production of crosslinked relief layer>

The kneaded resin composition was heated for 20 minutes at 160°C at a pressure of 4 MPa using a press machine (manufactured by Tester Sangyo Co., Ltd.), without performing sheet molding with a calender roll, and thereby a crosslinked relief layer having an average film thickness of 0.8 mm was obtained.

### <Production of flexographic printing plate precursor>

An adhesive layer was applied in the same manner as in Example 1 onto the crosslinked relief layer obtained as described above, and thus a flexographic printing plate precursor was produced.

### <Production of flexographic printing plate>

The flexographic printing plate precursor obtained as described above was laser-engraved in the same manner as in Example 1, and thereby a flexographic printing plate was obtained.

**[Table 1]**

| Table 1 (section 1) | Diene-based polymer | | Thermal polymerization initiator | | Carbon black | | Other filler | | Coating solvent | Calender molding | Engraving machine |
|---|---|---|---|---|---|---|---|---|---|---|---|
| | Kind | Amount added (parts by mass) | Kind | Amount added (parts by mass) | Kind | Amount added (parts by mass) | Kind | Amount added (parts by mass) | | | |
| Example 1 | A-4 | 1600 | B-1 | 32 | C-7 | 240 | D-2 | 160 | None | Yes | CO₂ |
| Example 2 | A-4 | 1600 | B-1 | 32 | C-7 | 240 | D-2 | 160 | None | Yes | Semiconductor |
| Example 3 | A-1 | 1600 | B-2 | 32 | C-1 | 240 | D-1 | 240 | None | Yes | Semiconductor |
| Example 4 | A-2 | 1600 | B-3 | 32 | C-2 | 240 | D-1 | 320 | None | Yes | Semiconductor |
| Example 5 | A-3 | 1600 | B-4 | 32 | C-3 | 240 | D-1 | 400 | None | Yes | Semiconductor |
| Example 6 | A-5 | 1600 | B-5 | 32 | C-4 | 240 | D-1 | 480 | None | Yes | Semiconductor |
| Example 7 | A-6 | 1600 | B-6 | 32 | C-5 | 240 | D-1 | 640 | None | Yes | Semiconductor |
| Example 8 | A-7 | 1600 | B-7 | 32 | C-6 | 240 | D-1 | 1.5 | None | Yes | Semiconductor |
| Example 9 | A-8 | 1600 | B-8 | 32 | C-8 | 240 | D-1 | 900 | None | Yes | Semiconductor |
| Example 10 | A-4 | 1600 | B-9 | 40 | C-9 | 120 | D-2 | 160 | None | Yes | Semiconductor |
| Example 11 | A-4 | 1600 | B-10 | 48 | C-10 | 120 | D-3 | 160 | None | Yes | Semiconductor |
| Example 12 | A-4 | 1600 | B-11 | 32 | C-11 | 240 | D-4 | 160 | None | Yes | Semiconductor |
| Example 13 | A-4 | 1600 | B-12 | 32 | C-12 | 240 | D-5 | 160 | None | Yes | Semiconductor |
| Example 14 | A-9 | 1600 | B-13 | 32 | C-7 | 240 | D-6 | 160 | None | Yes | Semiconductor |
| Example 15 | A-10 | 1600 | B-14 | 32 | C-7 | 240 | D-7 | 160 | None | Yes | Semiconductor |
| Example 16 | A-4 | 1600 | B-1 | 32 | C-7 | 240 | D-8 | 160 | None | Yes | Semiconductor |
| Example 17 | A-4 | 1600 | B-1 | 32 | C-7 | 240 | D-2 | 160 | None | Yes | Semiconductor |
| | | | | | | | D-9 | 20 | | | |
| Example 18 | A-6 | 1600 | B-1 | 32 | C-7 | 240 | D-2 | 160 | None | Yes | Semiconductor |
| Example 19 | A-11 | 1600 | B-1 | 32 | C-7 | 240 | D-2 | 160 | None | Yes | Semiconductor |
| Example 20 | A-4 | 1600 | B-1 | 2 | C-7 | 240 | D-2 | 160 | None | Yes | Semiconductor |
| Example 21 | A-4 | 1600 | B-1 | 80 | C-7 | 240 | D-2 | 160 | None | Yes | Semiconductor |
| Example 22 | A-4 | 1600 | B-1 | 160 | C-7 | 240 | D-2 | 160 | None | Yes | Semiconductor |
| Example 23 | A-4 | 1600 | B-1 | 160 | C-7 | 45 | D-2 | 160 | None | Yes | Semiconductor |
| Example 24 | A-4 | 1600 | B-1 | 160 | C-7 | 500 | D-2 | 160 | None | Yes | Semiconductor |
| Example 25 | A-12 | 1600 | B-1 | 32 | C-7 | 240 | D-2 | 160 | None | Yes | CO2 |
| Example 26 | A-12 | 1600 | B-1 | 32 | C-7 | 240 | D-2 | 160 | None | Yes | Semiconductor |
| Example 27 | A-12 | 1600 | B-1 | 32 | C-7 | 240 | D-1 | 161 | None | Yes | Semiconductor |
| Example 28 | A-12 | 1600 | B-1 | 32 | C-7 | 240 | D-6 | 162 | None | Yes | Semiconductor |
| Example 29 | A-12 | 1600 | B-1 | 32 | C-7 | 240 | D-7 | 163 | None | Yes | Semiconductor |
| Example 30 | A-12 | 1600 | B-1 | 32 | C-7 | 240 | D-9 | 164 | None | Yes | Semiconductor |

**[Table 2]**

| Table 1 (section 2) | Diene-based polymer | | Thermal polymerization initiator | | Carbon black | | Other filler | | Other additives | | Coating solvent | Calender molding | Engraving machine |
|---|---|---|---|---|---|---|---|---|---|---|---|---|---|
| | Kind | Amount added (parts by mass) | Kind | Amount added (parts by mass) | Kind | Amount added (parts by mass) | Kind | Amount added (parts by mass) | Kind | Amount added (parts by mass) | | | |
| Example 31 | A-4 | 1280 | B-1 | 40 | C-11 | 70 | D-3 | 600 | - | - | None | Yes | Semiconductor |
| | A-7 | 320 | | | | | | | | | | | |
| Example 32 | A-4 | 960 | B-1 | 40 | C-11 | 70 | D-4 | 600 | - | - | None | Yes | Semiconductor |
| | A-7 | 640 | | | | | | | | | | | |
| Example 33 | A-4 | 800 | B-1 | 40 | C-11 | 70 | D-4 | 600 | - | - | None | Yes | Semiconductor |
| | A-7 | 800 | | | | | | | | | | | |
| Example 34 | A-4 | 640 | B-1 | 40 | C-11 | 70 | D-4 | 600 | - | - | None | Yes | Semiconductor |
| | A-7 | 960 | | | | | | | | | | | |
| Example 35 | A-4 | 1600 | B-1 | 40 | C-11 | 70 | D-4 | 430 | - | - | None | Yes | Semiconductor |
| | | | | | | | D-6 | 660 | | | | | |
| Example 36 | A-3 | 640 | B-1 | 40 | C-11 | 48 | D-4 | 430 | - | - | None | Yes | Semiconductor |
| | A-6 | 960 | | | | | D-6 | 660 | | | | | |
| Example 37 | A-3 | 640 | B-1 | 40 | C-11 | 115 | D-4 | 430 | - | - | None | Yes | Semiconductor |
| | A-6 | 960 | | | | | D-6 | 660 | | | | | |
| Example 38 | A-3 | 640 | B-1 | 40 | C-11 | 150 | D-4 | 430 | - | - | None | Yes | Semiconductor |
| | A-6 | 960 | | | | | D-6 | 660 | | | | | |
| Example 39 | A-3 | 640 | B-1 | 40 | C-11 | 48 | D-4 | 530 | - | - | None | Yes | Semiconductor |
| | A-6 | 960 | | | | | D-6 | 540 | | | | | |
| Example 40 | A-3 | 640 | B-1 | 40 | C-11 | 48 | D-4 | 700 | - | - | None | Yes | Semiconductor |
| | A-6 | 960 | | | | | D-6 | 370 | | | | | |
| Example 41 | A-3 | 640 | B-1 | 40 | C-11 | 48 | D-4 | 860 | - | - | None | Yes | Semiconductor |
| | A-6 | 960 | | | | | D-6 | 370 | | | | | |
| Example 42 | A-4 | 640 | B-1 | 60 | C-7 | 180 | D-3 | 600 | E-1 | 260 | None | Yes | Semiconductor |
| | A-7 | 960 | | | | | | | F-1 | 16 | | | |
| Example 43 | A-4 | 640 | B-1 | 60 | C-7 | 180 | D-3 | 600 | E-2 | 260 | None | Yes | Semiconductor |
| | A-7 | 960 | | | | | | | F-1 | 16 | | | |
| Example 44 | A-3 | 640 | B-1 | 60 | C-11 | 180 | D-3 | 600 | E-3 | 260 | None | Yes | Semiconductor |
| | A-6 | 960 | | | | | | | F-1 | 16 | | | |
| Example 45 | A-3 | 640 | B-1 | 60 | C-11 | 180 | D-3 | 600 | E-3 | 260 | None | Yes | Semiconductor |
| | A-6 | 960 | | | | | | | F-2 | 16 | | | |
| Comparative Example 1 | A-13 | 1600 | B-1 | 32 | C-11 | 240 | D-2 | 160 | - | - | None | Yes | Semiconductor |
| Comparative Example 2 | A-4 | 1600 | B-1 | 32 | C-7 | 240 | | - | - | - | None | Yes | Semiconductor |
| Comparative Example 3 | A-4 | 80 | B-1 | 1.6 | C-7 | 12 | D-2 | 8 | - | - | Present | No | Semiconductor |
| Comparative Example 4 | A-4 | 80 | B-1 | 1.6 | C-7 | 12 | D-2 | 8 | - | - | None | No | Semiconductor |

### [Evaluation]

### [Evaluation of processability of relief forming layer: evaluation of calender roll detachability]

The detachability from a calender roll was evaluated by visual inspection at the outlet of the fourth roll. The evaluation was achieved using a 5-grade method, and grade 5 represents the maximum detachability, while grade 1 represents the minimum detachability, so that a value closer to 5 indicates that the detachability from the roll is improved. A value of 3 or more is considered acceptable.

### [Evaluation of processability of relief forming layer: sheet appearance]

The surface appearance of the sheet detached from the fourth roll was evaluated. The grade notation for the evaluation is described below.
A grade of 3 or higher was considered acceptable.
5: The sheet is very smooth, and the external appearance is highly satisfactory.
4: The sheet is smooth, and the external appearance is satisfactory.
3: Slight roughening of the surface can be seen.
2: Surface roughening is severe, and the external appearance is poor.
1: The surface irregularities are very serious, and the external appearance is very poor.

### [Evaluation of film thickness of flexographic printing plate precursor]

The surface of a flexographic printing plate precursor thus produced was scanned with a laser displacement meter (LK-H008 manufactured by Keyence Corp.), and the maximum height Ro of the surface roughness index was determined. When the average thickness of the flexographic printing plate precursor was designated as do, the value of (Ro / do) × 100 (%) was defined as the film thickness variation. When this value is smaller, the film thickness variation is smaller.

### [Evaluation of flexographic printing plate]

A performance evaluation of relief printing plates was carried out for the following items.

### <Rinsability>

A laser-engraved plate was immersed in a rinsing liquid described in the following Table 2, and the engraved section was rubbed 10 times with a toothbrush (manufactured by Lion Corp., Clinica Toothbrush Flat). Subsequently, the presence or absence of residue on the surface of the relief layer was checked with an optical microscope. The evaluation criteria are as follows.
A: There is no residue.
B: Slight residue is observed at the deepest part of engraving.
C: Most of the residue is removed, but slight residue remains.
D: A portion of the residue is removed, but the residue still remains.
E: The residue is not at all removed.

Rinsing liquids 1 to 6 thus used are as follows, and among the rinsing liquids indicated in the following Table 2, the rinsing liquids used for the evaluation are as follows in the following Table 3.

### (Preparation of Rinsing liquids 1 to 4)

Preparation of a rinsing liquid was carried out by adding a 48% aqueous solution of NaOH (manufactured by Wako Pure Chemical Industries, Ltd.) dropwise to 500 ml of pure water while stirred, and adjusting the pH to a predetermined pH. Subsequently, 16.7 g of SOFTAZOLINE LAO (aqueous solution of lauric acid amidopropyldimethylamine oxide, amidoamine oxide type amphoteric surfactant, content: 30%, manufactured by Kawaken Fine Chemicals Co., Ltd.) was added thereto, and the mixture was stirred for 30 minutes. Thus, a rinsing liquid was prepared.

### (Preparation of Rinsing liquid 5)

6.6 g of sodium hydrogen carbonate were added to 500 ml of pure water while the mixture was stirred, and 24.0 g of SOFTAZOLINE LAO (manufactured by Kawaken Fine Chemicals Co., Ltd.) and 96.4 g of SOFTAZOLINE LPB-R (aqueous solution of lauric acid amidopropylbetaine, amidopropylbetaine type amphoteric surfactant, content: 30%, manufactured by Kawaken Fine Chemicals Co., Ltd.) were further added thereto. The mixture was stirred for 30 minutes, and thus Rinsing liquid 5 was prepared.

### (Preparation of Rinsing liquid 6)

5.0 g of sodium hydrogen carbonate was added to 500 ml of pure water while stirred, and 24.0 g of SOFTAZOLINE LAO (manufactured by Kawaken Fine Chemicals Co., Ltd.) and 96.4 g of SOFTAZOLINE LPB-R (manufactured by Kawaken Fine Chemicals Co., Ltd.) were further added thereto. The mixture was stirred for 30 minutes, and thus Rinsing liquid 6 was prepared.

The pH's of the Rinsing liquids 1 to 6 are shown below.

**[Table 3]**

| Table 2 | pH |
|---|---|
| Rinsing Liquid 1 | 10.1 |
| Rinsing Liquid 2 | 11.1 |
| Rinsing Liquid 3 | 12.1 |
| Rinsing Liquid 4 | 13.1 |
| Rinsing Liquid 5 | 9.8 |
| Rinsing Liquid 6 | 8.5 |

### <Evaluation of ink receptivity>

A flexographic printing plate thus obtained was mounted on a printing machine (ITM-4 type, manufactured by Iyo Kikai Seisakusho Co., Ltd.), and printing was continued using UV FLEXO CF Black (manufactured by T&K Toka Co., Ltd.) as an ink and using FULL COLOR FORM M70 (manufactured by Nippon Paper Industries Co., Ltd., thickness: 100 µm) as printing paper. A comparison was made by visual inspection for the degree of adhesion of the ink in a solid image area on the printed material at a site 1,000 m away from the printing initiation point.

A sample which exhibited uniform adhesion of ink without any density unevenness was evaluated as A, and a sample which had slight unevenness was evaluated as B.

### <Printing durability>

A flexographic printing plate thus obtained was mounted on a printing machine (ITM-4 type, manufactured by Iyo Kikai Seisakusho Co., Ltd.), and printing was continued using UV FLEXO CF Black (manufactured by T&K Toka Co., Ltd.) as an ink and using FULL COLOR FORM M70 (manufactured by Nippon Paper Industries Co., Ltd., thickness: 100 µm) as printing paper. A highlight of 1% to 10% in the printed material was checked. When half-tone dots that were not printed were generated, or when half-tone dots became so large that the printed material was not readily acceptable, the time point was defined as completion of printing, and the number of printing operations implemented until the completion of printing was employed as an index. As the value is larger, the flexographic printing plate is considered to have higher printing durability.

### <Printing durability over time of raw plate>

A flexographic printing plate precursor thus obtained was stored for 3 days in an environment at 50°C/80%, and was subjected to the printing durability evaluation described above.

### <Printing durability over time of engraved plate>

A flexographic printing plate thus obtained was stored for 3 days in an environment at 50°C/80%, and was subjected to the printing durability evaluation described above.

The results of the aforementioned evaluations are presented in the following Table 3.

**[Table 4]**

| Table 3 (section 1) | Evaluation | | | | | | | | |
|---|---|---|---|---|---|---|---|---|---|
| | Roll detachability | Sheet appearance | Film thickness variation | Rinsability | | Ink receptivity | Printing durability | Printing durability over time of raw plate | Printing durability over time of engraved plate |
| | | | | Rinsing liquid | Evaluation | | | | |
| Example 1 | 4 | 4 | 12 | 4 | A | A | 550,000 | 550,000 | 550,000 |
| Example 2 | 4 | 4 | 12 | 4 | A | A | 600,000 | 600,000 | 600,000 |
| Example 3 | 5 | 5 | 12 | 4 | A | A | 600,000 | 600,000 | 600,000 |
| Example 4 | 5 | 5 | 11 | 4 | A | A | 600,000 | 600,000 | 600,000 |
| Example 5 | 5 | 5 | 10 | 4 | A | A | 600,000 | 600,000 | 600,000 |
| Example 6 | 5 | 5 | 8 | 4 | A | A | 600,000 | 600,000 | 600,000 |
| Example 7 | 5 | 5 | 8 | 4 | A | A | 550,000 | 550,000 | 550,000 |
| Example 8 | 3 | 3 | 15 | 4 | A | A | 500,000 | 500,000 | 500,000 |
| Example 9 | 3 | 3 | 15 | 4 | A | B | 400,000 | 400,000 | 400,000 |
| Example 10 | 4 | 4 | 12 | 4 | A | A | 600,000 | 600,000 | 600,000 |
| Example 11 | 4 | 4 | 12 | 4 | A | A | 600,000 | 600,000 | 600,000 |
| Example 12 | 4 | 4 | 12 | 4 | A | A | 600,000 | 600,000 | 600,000 |
| Example 13 | 4 | 4 | 12 | 4 | A | A | 600,000 | 600,000 | 600,000 |
| Example 14 | 4 | 3 | 12 | 1 | A | A | 500,000 | 500,000 | 500,000 |
| Example 15 | 4 | 3 | 12 | 2 | A | A | 500,000 | 500,000 | 500,000 |
| Example 16 | 4 | 3 | 12 | 3 | A | A | 500,000 | 500,000 | 500,000 |
| Example 17 | 5 | 4 | 15 | 5 | B | A | 600,000 | 600,000 | 600,000 |
| Example 18 | 4 | 4 | 12 | 4 | A | A | 600,000 | 600,000 | 600,000 |
| Example 19 | 4 | 4 | 18 | 6 | C | A | 350,000 | 350,000 | 350,000 |
| Example 20 | 4 | 4 | 12 | 4 | A | A | 400,000 | 400,000 | 400,000 |
| Example 21 | 4 | 4 | 12 | 4 | A | A | 500,000 | 500,000 | 500,000 |
| Example 22 | 3 | 3 | 12 | 4 | A | B | 400,000 | 400,000 | 400,000 |
| Example 23 | 3 | 3 | 15 | 4 | A | A | 350,000 | 350,000 | 350,000 |
| Example 24 | 5 | 5 | 8 | 4 | A | B | 450,000 | 450,000 | 450,000 |
| Example 25 | 4 | 4 | 10 | 4 | A | A | 450,000 | 450,000 | 450,000 |
| Example 26 | 4 | 4 | 10 | 4 | A | A | 500,000 | 500,000 | 500,000 |
| Example 27 | 4 | 4 | 12 | 4 | A | A | 450,000 | 450,000 | 450,000 |
| Example 28 | 3 | 4 | 11 | 4 | B | A | 450,000 | 450,000 | 450,000 |
| Example 29 | 4 | 4 | 10 | 4 | A | A | 450,000 | 450,000 | 450,000 |
| Example 30 | 4 | 4 | 10 | 4 | A | A | 450,000 | 450,000 | 450,000 |

**[Table 5]**

| Table 3 (section 2) | Evaluation | | | | | | | | |
|---|---|---|---|---|---|---|---|---|---|
| | Roll detachability | Sheet appearance | Film thickness variation | Rinsability | | Ink receptivity | Printing durability | Printing durability over time of raw plate | Printing durability over time of engraved plate |
| | | | | Rinsing liquid | Evaluation | | | | |
| Example 31 | 5 | 3 | 16 | 2 | A | A | 700,000 | 700,000 | 700,000 |
| Example 32 | 5 | 4 | 14 | 2 | A | A | 800,000 | 800,000 | 800,000 |
| Example 33 | 4 | 5 | 12 | 2 | A | A | 800,000 | 800,000 | 800,000 |
| Example 34 | 4 | 5 | 12 | 2 | A | A | 800,000 | 800,000 | 800,000 |
| Example 35 | 4 | 5 | 12 | 2 | A | A | 700,000 | 700,000 | 700,000 |
| Example 36 | 5 | 5 | 8 | 1 | A | A | 900,000 | 900,000 | 900,000 |
| Example 37 | 5 | 5 | 8 | 1 | A | A | 900,000 | 900,000 | 900,000 |
| Example 38 | 5 | 5 | 8 | 1 | A | A | 900,000 | 900,000 | 900,000 |
| Example 39 | 5 | 5 | 8 | 1 | A | A | 900,000 | 900,000 | 900,000 |
| Example 40 | 5 | 4 | 10 | 1 | A | A | 900,000 | 900,000 | 900,000 |
| Example 41 | 5 | 4 | 10 | 1 | A | A | 900,000 | 900,000 | 900,000 |
| Example 42 | 5 | 4 | 10 | 1 | A | A | 900,000 | 900,000 | 900,000 |
| Example 43 | 5 | 4 | 10 | 1 | A | A | 900,000 | 900,000 | 900,000 |
| Example 44 | 4 | 5 | 8 | 1 | A | A | 900,000 | 900,000 | 900,000 |
| Example 45 | 4 | 5 | 8 | 1 | A | A | 900,000 | 900,000 | 900,000 |
| Comparative Example 1 | 1 | 1 | 20 | 4 | E | A | 10,000 | 10,000 | 10,000 |
| Comparative Example 2 | 1 | 1 | 20 | 4 | B | A | 400,000 | 400,000 | 400,000 |
| Comparative Example 3 | - | - | 25 | 4 | C | A | 200,000 | 200,000 | 200,000 |
| Comparative Example 4 | - | - | 25 | 4 | B | A | 400,000 | 400,000 | 400,000 |

In the tables, since Comparative Examples 3 and 4 were not subjected to sheet molding using a calender roll, roll detachability and sheet appearance thereof were not evaluated.

As shown in Table 3, it was found that in a case in which a polyvinyl butyral that does not belong to a diene-based polymer was used, the detachability from a calender roll and the external appearance of the relief forming layer were poor, rinsability was poor, and printing durability and durability (printing durability over time of a raw plate and printing durability over time of an engraved plate) were also inferior (Comparative Example 1).

Furthermore, it was found that in a case in which a filler was not incorporated, the detachability from a calender roll and the external appearance of the relief forming layer were poor (Comparative Example 2).

On the contrary, it was found that Examples 1 to 45 in which a diene-based polymer, a thermal polymerization initiator, carbon black, and a filler were incorporated, exhibited satisfactory detachability from a calender roll, a satisfactory external appearance of the relief forming layer, and high production efficiency. Furthermore, it was found that the fluctuation in the film thickness of the flexographic printing plate precursor using the relief forming layer thus produced was small.

Furthermore, it was found that in Examples 1 to 45, the rinsability, ink receptivity, printing durability, and durability (printing durability over time of a raw plate and printing durability over time of an engraved plate) of the flexographic printing plates thus produced were satisfactory. Particularly, it was found that when Rinsing Liquids 1 to 4 in which the pH values of the aqueous alkali solutions used in the rinsing step were 10.0 or higher were used, more satisfactory rinsability was obtained.

Furthermore, Examples 19 was compared with other Examples, and thereby it was found that when polyisoprene, polybutadiene or EPDM was used as a diene-based polymer, the fluctuation in the film thickness of the flexographic printing plate precursor using the relief forming layer thus produced became smaller.

Also, it was found that in Examples 31 to 34 and 42 to 45 in which polybutadiene and polyisoprene were used in combination as diene-based polymers, and in Example 35 in which silica and calcium carbonate were used in combination as fillers, satisfactory printing durability was obtained. Particularly, it was found that in Examples 36 to 41 in which polybutadiene and polyisoprene were used in combination as diene-based polymers, and silica and calcium carbonate were used in combination as fillers, or in Examples 42 to 45 in which polybutadiene and polyisoprene were used in combination as diene-based polymers, and a polymerizable compound was incorporated, highly satisfactory printing durability was obtained.

### Explanation of References

- 1:: warm-up roll
- 2a, 2b:: roll
- 3:: calender roll
- 4a:: first roll
- 4b:: second roll
- 4c:: third roll
- 4d:: fourth roll
- 10:: resin composition
- 11:: resin composition after preliminary kneading
- 12:: relief forming layer

## Claims

1. A method for producing a flexographic printing plate precursor for laser engraving, the method comprising, in the following order:
a layer forming step of forming a relief forming layer using a resin composition for laser engraving, through sheet molding using a calender roll; and
a crosslinking step of crosslinking the relief forming layer by means of heat, and obtaining a flexographic printing plate precursor for laser engraving having a crosslinked relief forming layer,
wherein the resin composition for laser engraving is a resin composition including a diene-based polymer, a thermal polymerization initiator, carbon black, and a filler other than carbon black.

2. The method for producing a flexographic printing plate precursor for laser engraving according to claim 1, wherein the filler is at least one filler selected from the group consisting of silica, calcium carbonate, mica, talc, and a stearic acid metal salt.

3. The method for producing a flexographic printing plate precursor for laser engraving according to claim 1 or 2, wherein the filler is at least one filler selected from the group consisting of silica and calcium carbonate.

4. The method for producing a flexographic printing plate precursor for laser engraving according to claim 2 or 3, wherein the resin composition for laser engraving includes at least silica as the filler, and the nitrogen adsorption specific surface area of the silica is 50 m²/g to 300 m²/g.

5. The method for producing a flexographic printing plate precursor for laser engraving according to any one of claims 1 to 4, wherein the average particle size of the carbon black is 13 nm to 50 nm.

6. The method for producing a flexographic printing plate precursor for laser engraving according to any one of claims 1 to 5, wherein the diene-based polymer is at least one polymer selected from the group consisting of polyisoprene, polybutadiene, and an ethylene-propylene-diene copolymer.

7. The method for producing a flexographic printing plate precursor for laser engraving according to any one of claims 1 to 6, wherein the diene-based polymer is at least one polymer selected from the group consisting of polyisoprene and polybutadiene.

8. The method for producing a flexographic printing plate precursor for laser engraving according to any one of claims 1 to 7, wherein the content of the thermal polymerization initiator is 0.1 parts by mass to 3 parts by mass relative to 100 parts by mass of the diene-based polymer.

9. A method for producing a flexographic printing plate, the method comprising: an engraving step of performing laser-engraving on a flexographic printing plate precursor for laser engraving obtained by the production method according to any one of claims 1 to 8, and forming a relief layer; and a rinsing step of rinsing the surface of the relief layer with an aqueous alkali solution, and obtaining a flexographic printing plate.

10. The method for producing a flexographic printing plate according to claim 9, wherein the pH of the aqueous alkali solution is 10.0 or higher.

11. A resin composition for laser engraving, used for forming a relief forming layer of a flexographic printing plate precursor for laser engraving, the resin composition comprising a diene-based polymer, a thermal polymerization initiator, carbon black, and a filler other than carbon black.

12. The resin composition for laser engraving according to claim 11, wherein the thermal polymerization initiator is an organic peroxide.

13. The resin composition for laser engraving according to claim 11 or 12, wherein the filler is at least one filler selected from the group consisting of silica, calcium carbonate, mica, talc, and a stearic acid metal salt.

14. The resin composition for laser engraving according to any one of claims 11 to 13, wherein the filler is at least one filler selected from the group consisting of silica and calcium carbonate.

15. The resin composition for laser engraving according to claim 13 or 14, wherein the resin composition comprises at least silica as the filler, and the nitrogen adsorption specific surface area of the silica is 50 m²/g to 300 m²/g.

16. The resin composition for laser engraving according to any one of claims 11 to 15, wherein the average particle size of the carbon black is 13 nm to 50 nm.

17. The resin composition for laser engraving according to any one of claims 11 to 16, wherein the diene-based polymer is at least one polymer selected from the group consisting of polyisoprene, polybutadiene, and an ethylene-propylene-diene copolymer.

18. The resin composition for laser engraving according to any one of claims 11 to 17, wherein the diene-based polymer is at least one polymer selected from the group consisting of polyisoprene and polybutadiene.

19. The resin composition for laser engraving according to any one of claims 11 to 18, wherein the content of the thermal polymerization initiator is 0.1 parts by mass to 3 parts by mass relative to 100 parts by mass of the diene-based polymer.

20. The resin composition for laser engraving according to any one of claims 11 to 19, wherein the content of the carbon black is 3 parts by mass to 30 parts by mass relative to 100 parts by mass of the diene-based polymer.
